# EUROPÄISCHE PATENTSCHRIFT

(11) **EP 3 477 961 B1**
(45) Veröffentlichungstag und Bekanntmachung des Hinweises auf die Patenterteilung: **23.03.2022**
(21) Anmeldenummer: 18202556.9
(22) Anmeldetag: 25.10.2018
(51) Int. Cl.: H04Q 9/02, H04W 88/04, H04W 84/18, H04W 88/16

(54) **VERFAHREN ZUM ÜBERTRAGEN VON DATEN UND DATENSAMMLER**
DATA TRANSFER METHOD AND DATA STORAGE DEVICE
PROCÉDÉ DE TRANSFERT DES DONNÉES ET COLLECTEUR DE DONNÉES

(30) Priorität: 30.10.2017 DE 102017125371
(43) Veröffentlichungstag der Anmeldung: 01.05.2019
(73) Patentinhaber: Techem Energy Services GmbH, 65760 Eschborn (DE)
(72) Erfinder: Schulz, Hans-Jürgen, 61381 Friedrichsdorf (DE); Simon, Winfried, 64579 Gernsheim (DE); Wurl, Dr. Andreas, 61462 Königstein (DE); Gutmann, Norbert, 64295 Darmstadt (DE)
(74) Vertreter: Keil & Schaafhausen Patentanwälte PartGmbB

(56) Entgegenhaltungen:
- EP-A1- 1 895 456
- US-A1- 2016 135 109

## Beschreibung

Die Erfindung betrifft ein Verfahren zum Übertragen von Daten aus einem lokalen Funknetz in einem Gebäude zu einer entfernten Zentrale nach dem Obergriff des Anspruchs 1. Bei dem Verfahren ist vorgesehen, dass die Daten von Endgeräten an in dem Gebäude installierte batteriebetriebene Datensammler (zu verstehen auch im Sinne von Datenkonzentratoren) übertragen werden und von den Datensammlern insbesondere zwischengespeichert und (bspw. zyklisch oder nach Anforderung) an die Zentrale weiter übertragen werden. In der Zentrale werden die Daten der Endgeräte gespeichert, um diese zu sichern und weiterzuverarbeiten, bspw. eine Verbrauchsabrechnung zu erstellen oder Geräte in einer Hausinstallation fern zu überwachen. Eine bevorzugte Ausführungsform des Verfahrens betrifft entsprechend das Übertragen von in einem Gebäude erfassten Verbrauchsdaten, die von Verbrauchserfassungsgeräten, wie Heizkostenverteilern, Wasserzählern, Wärmezählern, Gaszählern, Elektronzählern oder dergleichen, als Endgeräte ermittelt und über die Datensammler an eine bspw. vom einem Verbrauchsabrechnungsdienstleister betriebene Zentrale übertragen werden. Ferner können auch Rauchwarnmelder oder sonstige Überwachungsgeräte als Endgeräte Statusdaten an die Zentrale übertragen, insbesondere wenn - wie bspw. bei Rauchwarnmeldern gesetzlich vorgeschrieben - regelmäßig deren Funktionsfähigkeit oder Status überprüft werden muss.

Jedes Endgerät sendet die Daten als Datentelegramm in einer Funkkommunikation des lokalen Funknetzes aus, wobei entsprechend dem vorgeschlagenen Verfahren
a) die durch das Endgerät unidirektional ausgesendeten Datentelegramme von einem in Funkreichweite des Endgeräts installierten Datensammler empfangen werden,
b) der Datensammler die Daten (bspw. unverändert als die empfangenen Datentelegramme oder in aus den Datentelegrammen abgeleiteter Form) über eine Mobilfunk-Kommunikationsstrecke an die Zentrale weiterleitet.

Die durch das Endgerät ausgesendeten Daten können Teil eines sogenannten "Short Range Devices" (SRD)-Funktelegramms sein und die Verbrauchswerte und/oder die Gerätestatusinformationen beinhalten. Entsprechend ist unter den Begriffen Endgerätedatentelegramm, Datentelegramm, Funktelegramm und Endgerätetelegramm dann insbesondere ein SRD-Funktelegramm zu verstehen, das sowohl Daten / Datenblöcken, die vorzugsweise verschlüsselten Verbrauchsdaten beinhaltet, oder auch ein SRD-Funktelegramme ohne Verbrauchswerte zu verstehen, also ein Funktelegramm, das mindestens den unverschlüsselten Endgerätestatus und die unverschlüsselte Endgeräte-ID beinhaltet oder das einen dann verschlüsselten erweiterten Endgerätestatus und weitere verschlüsselte Endgeräteinformationen beinhaltet.

Ein Gebäude (zu verstehen im Sinne einer Liegenschaft) muss nicht als ein einzelstehendes Gebäude im Sinne einer geschlossenen Baueinheit (bspw. ein Haus wie ein Ein- oder Mehrfamilienhaus oder ein Bürogebäude) verstanden werden. Gebäude bzw. Liegenschaft im Sinne der hier verwendeten Definition kann auch ein Komplex aus benachbarten Baueinheiten (d.h. mehreren benachbarten Häusern) sein, in denen jeweils Komponenten eines lokalen Funknetzes (Endgeräte und/oder Datensammler) innerhalb der Funkreichweite installiert so sind, dass Endgeräte und Datensammler aus den verschiedenen Baueinheiten in demselben Funknetz kommunizieren.

Unter "Übertragen bzw. Weiterleiten der Daten" bzw. dem "Aufbau einer Kommunikationsverbindung zwischen dem Datensammler und der Zentrale" wird im Rahmen dieser Offenbarung - abweichend von dem üblichen Verständnis in der Kommunikationstechnik - nicht nur der Aufbau einer direkten Kommunikationsverbindung zwischen dem Datensammler und der Zentrale verstanden, so dass Kommunikationsschnittstellen von Datensammler und Zentrale über ein Kommunikationsprotokoll direkt miteinander kommunizieren. Vielmehr ist darunter als ein besonders bevorzugtes Verfahren auch zu verstehen, dass der Datensammler eine Verbindung zu einem Cloud-Speicher aufbaut und seine Daten in den Cloud-Speicher überträgt, in dem die Daten für einen beliebigen, aber autorisierten weiteren Zugriff gespeichert werden. In diesem Sinn greift dann die Zentrale auf die in der Cloud gespeicherten Daten zu, entweder über eine weitere Verbindung zwischen Zentrale und Cloud-Speicher und/oder über eine in der Cloud gespeicherte und ausgeführte Applikation, die Aufgaben der Zentrale wahrnimmt, aber technisch nicht zu der Zentrale gehört. Die Cloud und/oder der Cloud-Speicher können von dem IT-System der Zentrale kommunikationstechnisch und funktionell getrennt sein und autark funktionieren. Insbesondere können die Cloud und die Cloud-Speicher als externe Produkte von IT-Servicedienstleistern zur Verfügung gestellt und betrieben werden.

Diese Speicherung der Daten in einem Cloud-Speicher kann sowohl für eine "Übertragung" von dem Datensammler zu der Zentrale als auch für eine Übertragung von der Zentrale zu dem Datensammler verwendet werden. Der Vorteil ist, dass keine Übertragung im Sinne einer üblichen Kommunikationstechnik stattfindet, sondern eine zentrale Speicherung in einem Bereich, auf den verschiedene Anwendungen zugreifen können. Weil die Anwendungen (ggf. auch verschiedene IT-Systeme) auf dieselben Daten zugreifen, entfällt eine ansonsten aufwendige Synchronisation der aus verschiedenen Anwendungen (auch verschiedenen IT-Systemen) stammenden Daten.

Die US 2013/0095877 A1 beschreibt ein Verbrauchserfassungsnetzwerk mit Endgeräten, die für bestimmte Gruppen ein erstes bidirektionales Primärfunk-Netzwerk aufbauen, in dem alle Informationen eines Endgeräts einem ausgewählten Relay-Endgerät zugeleitet werden. Dieses ausgewählte Relay leitet diese Informationen über ein weiteres Relay kabelgebunden oder über ein anderes Sekundärfunknetz an eine Zentrale weiter. Das Funknetzwerk in jeder der Gruppen ist unterschiedlich ausgebildet, und zumindest die ausgewählten Relay-Endgeräte oder alle Endgeräte haben verschiedenen Funkmodule, so dass ein Gerät aus einer Gruppe durch Verwendung einer alternativen Funkverbindung auch der zweiten Gruppe zugeordnet werden kann, um die Informationen über das weitere Relay dieser Gruppe an die Zentrale weiterzuleiten.

In der EP 1 895 456 A1 wird ein System zum Berichten von Container-Events offenbart, wobei vorgesehen ist, dass die Container ihre Nachrichten, die abhängig von einem Event erzeugt werden, für einen zentralen Empfang aussenden. Ein mögliches Event bildet eine erhöhte Temperatur innerhalb des Containers, die während einer Temperaturmessung durch einen Sensor festgestellt wird. Nachrichten, die abhängig von einem Event erzeugt werden, werden anschließend entsprechend einer implementierten Logik und in Abhängigkeit der funktechnisch erreichbaren Netzwerkschnittstellen weitergeleitet und ausgesendet.

Die US 2016/0135109 A1 zeigt ein Verfahren zur Weiterleitung von Sensordaten an eine zentrale Einheit über eine Basisstation, wobei die Sensoren ihre Daten untereinander weiterleiten können, sodass bereits ein erfolgreicher Kommunikationsaufbau eines Sensors zur Basisstation genügt, um auch die Sensordaten anderer Sensoren, die keinen direkten Zugang zur Basisstation aufbauen können, weiterzuleiten.

Aus der EP 1 653 677 B1 ist Funksystem zur Übertragung von Daten zwischen mehreren Datensammlern zur Erfassung und/oder Auswertung von Verbrauchsdaten mit jeweils einer Recheneinheit mit Datenspeicher, einem Funksender zum Senden und einem Funkempfänger zum Empfangen von die Daten enthaltenden Funktelegrammen bekannt. Mindestens einem Datensammler sind als Datenquelle vorher festgelegte Daten zugeordnet, bspw. die Daten eines Verbrauchserfassungsgeräts. Jeder Datensammler speichert sowohl ihm zugeordnete Daten als auch von einem anderen Gerät empfangene Daten in seinem Datenspeicher ab und sendet diese als Funktelegramm mindestens einmal aus, wobei zwischen Geräten ggf. eine Einrichtung zum Wiederholen von Funktelegrammen (Repeater) angeordnet ist. Um eine zirkulare Datenübertragung zwischen den einzelnen Datensammlern zu vermeiden, ist vorgesehen, dass jeder Datensammler ihm zugeordnete Daten mit einem Zählerwert versieht, den Zählerwert bei einer Änderung dieser Daten weiterzählt und die geänderten Daten zusammen mit dem Zählerwert mindestens einmal aussendet. Jeder Datensammler speichert empfangene Daten zusammen mit dem Zählerwert in dem Datenspeicher nur ab und sendet diese wieder aus, wenn der Zählerwert dieser Daten sich gegenüber dem in seinem Datenspeicher abgespeicherten Zählerwert verändert hat. Dies ist zwar insofern effektiv, als in einem Datensammler gespeicherte Daten nur bei einer Änderung des zugrundeliegenden Dateninhalts gespeichert werden. Allerdings erfordert dies einen enormen Verwaltungsaufwand, der bei selbst batteriebetriebenen Datensammlern einen hohen zusätzlichen Energiebedarf benötigt. Aufgrund des breit angelegten Datenflutens, bei dem jedes Datentelegramm durch jeden empfangenden Datensammler erneut im lokalen Funknetz ausgesendet wird, ist mit großer Sicherheit gewährleistet, dass die Datentelegramme aller Verbrauchsgeräte eine Auswertezentrale (Masterdatensammler oder über den Masterdatensammler erreichbare Zentrale) erreichen, allerdings auf Kosten eines hohen Energieverbrauchs der Datensammler und einen erhöhten Kommunikation in dem lokalen Funknetz zwischen den Datensammlern, die zu vermehrten Kollisionen bei den Funktelegramme, was zu einer Störung in der Funkübertragung führen kann.

Endgeräte können ihre Funkdatentelegramme in einem unidirektionalen asynchronen Endgerätefunk senden, bei dem die Aussendung in der Regel mit einem gegebenen Zeitraster (Sendeintervall) erfolgt, wobei aber - im Gegensatz zum synchronen Endgerätefunk - aus dem Funkempfangszeitpunkt nicht über die Anwendung einer Rechenregel auf den Zeitpunkt der nächsten Funkaussendung geschlossen werden kann, da das Sendeintervall einen zufälligen Zeitanteil aufweist. Der asynchrone Funkmodus ist beispielsweise in der europäischen Norm DIN EN 13757-4:2013 "Communication systems for meters and remote reading of meters - Part 4: Wireless meter readout" als "Frequent transmit mode" beschrieben. Beim asynchronen Endgerätefunk muss ein Funkempfänger, insbesondere ein in der Liegenschaft fest installierter Datensammler, daher über einen größeren Zeitraum auf Empfang gehen, d.h. ein Empfangszeitfenster öffnen, um die Endgerätedatentelegramme zu empfangen. Die Empfangsdauer (Breite eines Empfangsfensters) ist dabei meist mindestens zwei Endgerätefunk-Sendeintervalle lang, damit mindestens ein Sendezeitpunkt des Endgeräts zuverlässig in das Empfangsfenster des Datensammlers fällt. Solche Empfangsfenster liegen von ihrer Dauer her typischerweise im Minutenbereich, teilweise im Stundenbereich (bspw. bei einem Datensammler unmittelbar nach dem Start der Funknetz-Inbetriebnahme) und werden daher als "Dauerempfangsphase" bezeichnet.

Endgeräte können ihre Funktelegramme auch in einem unidirektionalen synchronen Endgerätefunk aussenden, bei dem die Endgeräte das nächste Funktelegramm zu einem durch den Funkempfänger (Datensammler) vor dem nächsten Funkempfang recht genau errechenbaren Zeitpunkt senden. Der Zeitpunkt der nächsten Funkaussendung ist für den Funkempfänger daher vorhersagbar, also prädizierbar, so dass ein deutlich kleineres Empfangsfenster (Empfangsfensterdauer nur wenige Millisekunden) möglich wird, in dem dann allerdings auch nur das eine Funktelegramme des prädizierten Endgeräts empfangen wird. Die Rechenregel, wie eine synchrone Funkaussendung gemäß Standard realisiert werden kann, sind dem Fachmann hinreichend bekannt und sind beispielsweise in der Technische Richtlinie BSI TR-03109-1 Anlage III: Feinspezifikation "Drahtlose LMN-Schnittstelle" Teil a: "OMS Specification Volume 2, Primary Communication" Version 1.0 vom 18.03.2013 des Bundesamts für Sicherheit in der Informationstechnik beschrieben, wobei OMS als Abkürzung für "Open Metering System" steht.

Endgeräte können dazu eingerichtet sein, dass sie beide Endgerätefunkarten, also asynchronen Endgerätefunk und synchronen Endgerätefunk unterstützen. Es können sogar Funk-Telegramm beider Endgerätefunkarten alternierend ausgesendet werden.

Aufgabe der vorliegenden Erfindung ist es, in einem dezentral organisierten lokalen Funksystem, in dem jeder Datensammler von ihm empfangene Endgerätedaten über eine zweite, nicht lokale Funkverbindung (bspw. eine Mobilfunkstrecke zur Fernübertragung von Daten) zu einer Auswertezentrale übermittelt, eine Ausfallsicherheit im Falle einer Störung der nicht lokalen Funkverbindung des jeweiligen Datensammlers zu erreichen.

Diese Aufgabe wird durch ein Verfahren mit den Merkmalen das Anspruchs 1 und einen Datensammler mit den Merkmalen das Anspruchs 13 gelöst, wobei eine Recheneinheit des Datensammlers insbesondere zu den durch den Datensammler auszuführenden Verfahrensschritten des vorgeschlagenen Verfahrens eingerichtet ist. Durch diese Verfahrensschritte wird der Kernablauf des vorgeschlagenen Verfahrens gelöst, der im Wesentlichen unabhängig von dem Aussenden der Datentelegramme durch die Endgeräte und den Empfangen der weitergeleiteten Daten oder Datentelegramme durch die Zentrale ist.

Im Rahmen des eingangs beschriebenen Verfahrens zum Übertragen von Daten aus einem lokalen Funknetz zu einer entfernten Zentrale mittels in dem Gebäude installierten Datensammlern ist insbesondere vorgesehen, dass ein Verbindungsaufbau von dem Datensammler zu der Zentrale über die Mobilfunk-Kommunikationsstrecke durch den Datensammler geprüft wird und, sofern eine Verbindung über die Mobilfunk-Kommunikationsstrecke mit der Zentrale nicht zustande kommt, der Datensammler als Datensammler ohne Mobilfunk-Datenübertragung von Endgeräten empfangene und vorzugsweise auch (bspw. aufgrund einer in dem Datensammler vorhandenen Speicherliste oder Übertragungsliste) gespeicherte Datentelegramme über die Funkkommunikation des lokalen Funknetzes unidirektional wieder aussendet, also wiederholt ("repeatet"), so dass die Datentelegramme durch benachbarte Datensammler in Funkreichweite des die Datentelegramme wieder aussendenden Datensammlers empfangen und an die Zentrale weitergeleitet werden können.

Der Datensammler prüft, ob ein für seine Datenübertragung für ihn freigegebenes Mobilfunknetzwerk (bspw. ein ausgewählter Provider mit Vertrag) verfügbar ist und startet die Einwahl in ein Mobilfunknetzwerk. Das Zustandekommen der Mobilfunkverbindung ist dann gegeben, wenn sich der Datensammler im Mobilfunknetzwerk eingebucht hat. Eine Mobilfunk-Datenübertragung ist dann zustande gekommen, wenn der Datensammler seine Daten zur Zentrale übertragen hat. Bspw. kann dies dadurch festgestellt werden, dass der Datensammler eine positive Bestätigung der Zentrale (Empfangsquittierung) erhalten hat.

Ein Nicht-Zustandekommen der Mobilfunk-Datenübertragung umfasst auch eine (an sich zustande gekommene) Mobilfunkverbindung, die eine qualitativ so schlechte oder zeitlich so kurze Verbindung ist, dass eine Datenübertragung nicht möglich ist bzw. als eine solche bewertet wird. Hierfür können Grenzwerte für die Bewertung der Verbindungsqualität, bspw. durch den Datensammler während der Mobilfunkverbindung ermittelte RSSI-Werte der Mobilfunkverbindung zur Basisstation, und/oder die zeitliche Dauer der Mobilfunk-Datenübertragung (Timeout) vorgegeben werden, die üblicherweise für eine erfolgreiche Übertragung benötigt werden. Außerdem kann ein Nicht-Zustandekommen auch bedeuten, dass mehre aufeinander folgende Versuch zum Verbindungsaufbau über die Mobilfunk-Kommunikationsstrecke durch den Datensammler durchgeführt, versucht und bewertet werden, bevor der Datensammler feststellt, ob oder dass eine Mobilfunk-Datenübertragung nicht zustande kommt. Dies kann insbesondere dann der Fall sein, wenn bei keinem der mehreren Versuche zu einem Verbindungsaufbau eine Verbindung über die Mobilfunk-Kommunikationsstrecke zustande kommt.

Umgekehrt gilt die Mobilfunk-Datenübertragung als zustande gekommen, sobald ein Verbindungsversuch von mehreren Verbindungsversuchen den durch den Datensammler überprüfbaren Kriterien für das Zustandekommen der Mobilfunk-Datenübertragung genügt. Neben den genannten Kriterien Funkqualität und Dauer der Verbindung kann als Kriterium auch der Stromverbrauch durch das Mobilfunkmodem für den Verbindungsaufbau bis zum Beenden der Verbindung herangezogen werden, der mit der Menge der gesendeten und/oder empfangenen Daten korreliert ist. Die Datenübertragung über die Mobilfunk-Kommunikationsstrecke beinhaltet die Einwahl, den Verbindungsaufbau und oftmals auch den Aufbau einer für die Datenübertragung geeigneten sogenannten "Session" zwischen zwei Teilnehmern, wobei der Datensammler der eine Teilnehmer und der die Daten weiterverarbeitende oder speichernde Server bzw. Cloud-Dienst der zweite Teilnehmer ist. Oftmals erfolgt die Datenübertragung in der Session paketorientiert. Das bedeutet für den Datensammler, dass er die Daten mehrerer Endgeräte zu einem Datenpaket für die Mobilfunkübertragung zusammenfasst. Der Empfang eines Datenpakets wird bei einer Session durch den "Empfänger" quittiert. Da während der gesamten Kommunikation in einer Session die Mobilfunk-Datenübertragung aufrechterhalten werden muss, kann das Ausbleiben von Quittungen bei bekannter maximaler Reaktionsdauer (Timeout) oder eine sehr lange Reaktionszeit (Grenzwert) dazu führen, dass entweder das Paket erneut versendet wird oder die Datenübertragung abgebrochen und die Verbindung abgebaut, also beendet wird. Der Abbruch durch den Datensammler kann nun auch dann erfolgen, wenn ein vorgegebener Maximalwert für den Stromverbrauch für die zu übertragende Datenmenge, beispielsweise einer Anzahl an (gleich großen) Datenpaketen im Datensammler, überschritten wird.

Es ist bekannt, dass eine Mobilfunkverbindung tageszeitlichen Schwankungen unterliegt. Werden beispielsweise viele Telefongespräche in einer Mobilfunkzelle geführt, so senkt der Mobilfunkprovider üblicherweise den Empfangspegel in den Basisstationen für Datenübertragung ab, damit die Telefonate mit guter Qualität erfolgen können. Bei einer schwachen Mobilfunkstrecke, die anhand eines schlechten RSSI-Pegels erkennbar ist, steigt der Stromverbrauch des Mobilfunkmodems deutlich an. Der Datensammler kann daher in dieser Situation prüfen, ob die zu übertragende Datenmenge den maximale Stromverbrauchswert je Datenübertragungsphase überschreiten würde und er kann dann die Datenübertragung entweder mit einer geringeren Datenmenge durchführen oder er kann die Mobilfunkverbindung und/oder die Mobilfunk-Datenübertragung als "nicht-zustandegekommen" bewerten. Wird wieder ein besserer RSSI-Pegel erkannt, der eine Übertragung der Datenmenge ohne Überschreitung des Maximalwerts zum Stromverbrauch erlaubt, kann der Datensammler die Mobilfunkübertragung in der beschriebenen Weise wiederaufnehmen.

Erfindungsgemäß kann das Weiterleiten der Datentelegramme zu festgelegten Zeitpunkten erfolgen, bspw. mit einer vorgegebenen zeitlichen Häufigkeit, zu vorgegeben Zeiten, wie Datum und/oder Uhrzeit, vorzugsweise in den Nachtstunden, oder anderweitig durch den Datensammler bzw. dessen Recheneinheit bestimmbaren Zeitpunkten. Zu diesen festgelegten Zeitpunkten startet der Datensammler dann den Aufbau einer Mobilfunkverbindung über die Mobilfunk-Kommunikationsstrecke. Kommt bei dem Versuch eines Verbindungsaufbaus eine Mobilfunkverbindung zustande, die für das Weiterleiten der Datentelegramme an die Zentrale sowie ggf. den Empfang der Datentelegramme durch die Zentrale genutzt werden kann, gilt dieser Datensammler als "Datensammler mit Mobilfunk-Datenübertragung". Dafür ist es ausreichend, wenn eine Verbindung nach zumindest einem von mehreren Versuchen zum Verbindungsaufbau zu dem festgelegten Zeitpunkt zustande kommt. Mit anderen Worten kann das heißen, dass zu dem festgelegten Zeitpunkt, und nicht erst zu dem nächsten festgelegten Zeitpunkt, ein Verbindungsaufbau zustande kommt. Allerdings kann erfindungsgemäß auch festgelegt werden, dass von einem Nicht-Zustandekommen erst dann ausgegangen wird, wenn bei einer definierten (und in dem Datensammler festgelegte) Anzahl von festgelegten Zeitpunkten für das Weiterleiten von Datentelegrammen kein Verbindungsaufbau zustande kommt. In einem der in diesem Absatz definierten Fälle des Nicht-Zustandekommens einer Mobilfunk-Datenübertragung wird im Rahmen dieser Offenbarung auch von einem "Datensammler ohne Mobilfunk-Datenübertragung" gesprochen. Damit ist also gemeint, dass trotz mindestens eines Versuchs oder mindestens mehrerer Versuche des Datensammlers zum Aufbau einer Mobilfunk-Datenübertragung über die Mobilfunk-Kommunikationsstrecke eine Mobilfunk-Datenübertragung nicht zustande kommt. Nicht gemeint ist damit ein Daten sammler, der temporär zu einem Zeitpunkt keine Mobilfunkverbindung zu der Zentrale hat, zu dem eine Verbindung auch nicht vorgesehen ist.

Durch das erfindungsgemäß vorgeschlagene Wiederaussenden von empfangenen Endgeräte-Datentelegrammen durch einen Datensammler ohne Mobilfunk-Datenübertragung (auch als Datensammler im Repeater-Modus bezeichnet) wird durch den Datensammler also eine Repeater-Funktion realisiert. Der Datensammler ohne Mobilfunkverbindung nimmt erfindungsgemäß also als Repeater des lokalen Funknetzes an der Übertragung der Daten zu der Zentrale teil, um möglichst zu gewährleisten, dass alle zu übertragenden Daten die Zentrale auch erreichen. Das Wiederaussenden der Datentelegramme kann bspw. nach dem OMS-Standard erfolgen, so dass alle Datensammler, die Datentelegramme nach dem OMS-Standard empfangen, auch die wieder ausgesendeten Datentelegramme lesen und weiterverarbeiten können. Die Repeaterfunktion kann gemäß den Anforderungen der Open Metering System Specification Vol.2 - Primary Communication Version 3.0.1 / 2011-01-29 ausgestaltet sein. Da die Endgeräte in dem Funksystem unidirektional senden, wird eine unidirektionale Repeaterfunktion verwendet. Bei dieser unidirektionalen Repeaterfunktion gemäß OMS-Standard wiederholt der Repeater nur bestimmte von ihm empfangene Endgerätetelegramme, und zwar nur solche, die mit dem OMS-System kompatibel sind und gewisse im Standard vorgegeben Anforderungen erfüllen. Die wieder ausgesendeten Endgeräte-Datentelegramme werden vor der Aussendung vorzugsweise als durch einen Repeater ausgesendet markiert, damit eine die Daten verarbeitende Anwendung erkennt, dass es sich um zeitlich verzögert ausgesendete Telegramme handelt und entsprechend die Daten nicht für zeitkritische Anwendungen verwendet. Das Kennzeichen wird hierbei dem Endgerätetelegramm beigefügt bzw. ist der sogenannte "Hop-Counter", der bei jedem für die Repeaterfunktion geeigneten OMS-konformen Funktelegramm im sogenannten "Configuration Word", das Teil des unverschlüsselten Anteils des Funktelegramms ist, geführt wird. Der Hop-Counter wird durch den Repeater vor der Aussendung des wiederholten Endgerätetelegramms von 0 auf 1 gesetzt: Die Übertragungssicherungsblockzeichen (CRC-Worte) im Endgerätefunktelegramm müssen aufgrund dieser Telegrammänderung neu berechnet werden und ersetzen die ursprünglichen CRC-Worte in dem Endgerätefunktelegramm. Die erneute Aussendung des Endgerätefunktelegramms durch den Repeater erfolgt zeitlich zufällig ("random repeat delay"), wobei vorzugsweise eine zeitliche Verzögerung von mindestens 5 Sekunden, aber nicht mehr als 25 Sekunden nach dem Empfangszeitpunkt des Endgerätetelegramms, als eine Randbedingung eingehalten werden muss.

Es ist auch möglich, dass der Datensammler im Repeater-Betriebsmodus ein Endgeräte-Datentelegramm als Synchron-Endgerätefunk-Funktelegramm weiterleitet, wobei die Anforderungen an den dann durch einen anderen Datensammler prädizierten (Endgeräte-) Sendezeitpunkt eingehalten werden muss.

Gemäß einer bevorzugten Ausführungsform der Erfindung kann der Datensammler aufgrund der Verbindungsqualität, Dauer der Mobilfunk-Datenübertragung und/oder Anzahl der Verbindungs- bzw. Datenübertragungsversuche für die Mobilfunk-Datenübertragung über die Mobilfunk-Kommunikationsstrecke sowie ggf. weiterer in dem Datensammler festgelegter Kriterien eigenständig entscheiden, ob von Endgeräten empfange Datentelegramme in einer Funkkommunikation des lokalen Funknetzes wieder ausgesendet werden müssen. Damit ist das Umschalten des Datensammlers von einem Gateway-Modus, in dem die empfangenen Datentelegramme wie im Regelfall vorgesehen über die Mobilfunk-Kommunikationsstrecke weitergeleitet werden, in einen Repeater-Modus, in dem die empfangenen Datentelegramme in dem lokalen Funknetz repeated werden, durch eine eigenständig von dem Datensammler getroffenen Entscheidung (aufgrund von in dem Datensammler autark erhobenen Informationen zu der Mobilfunk-Datenübertragung) möglich.

In einer Weiterführung kann es vorteilhaft sein, dass ein Datensammler mit Mobilfunk-Datenübertragung, der im Gateway-Betriebsmodus (Gateway-Modus) arbeitet, und der ein bestimmtes Endgerät oder mehrere bestimmte Endgeräte auch direkt empfangen kann, über ein besonderes Funktelegramm, bspw. ein "Do-Not-Repeat" Funktelegramm, einem bestimmten Datensammler oder allen Datensammlern ohne Mobilfunk-Datenübertragung, die im Repeater-Betriebsmode (Repeater-Modus) arbeiten, bspw. "adressiert" oder mit einem "Broadcast" mitteilt, dass die Funktelegramme für ein bestimmtes Endgerät nicht weitergeleitet werden sollen. Dieses "Do-Not-Repeat" Kennzeichen hat als Vorteil, dass damit die Anzahl von Funktelegrammen im Funksystem reduziert wird, was beim Datensammler Strom spart (weniger Senden) und zusätzlich eine Verbesserung im gesamten Funksystem bringt, da durch eine geringere Anzahl von Funktelegrammen die Stör- bzw. Kollisionswahrscheinlichkeit sinkt. Endgeräte, für die ein Datensammler im Repeater-Betriebsmodus keine Endgeräte-Funktelegramme weiterleiten soll, können in einer "Do-Not-Repeat"-Liste geführt werden, so dass der Datensammler im Repeater-Betriebsmodus nach dem Endgeräte-Funktelegrammempfang prüft, ob dieses Gerät auf der "Do-Not-Repeat" Liste steht und die Weiterleitung für solch ein Endgerät daher unterdrückt werden soll.

Um zu vermeiden, dass infolge von Veränderungen in den Funkempfangsbedingungen bei einem Datensammler mit Mobilfunk-Datenübertragung, ein Endgerät gar nicht mehr zur Zentrale übertragen würde, da es auf der "Do-Not-Repeat" Liste eines oder einiger Datensammler ohne Mobilfunk-Datenübertragung steht, aber auch nicht mehr durch den Datensammler mit Mobilfunk-Datenübertragung empfangen werden kann, kann der Datensammler mit Mobilfunk-Datenübertragung ein besonderes Funktelegramm als sogenanntes "Repeat-Endgerät" Funktelegramm aussenden. Alternativ kann ein Datensammler im Repeater-Modus zyklisch testweise ein oder mehrere Endgeräte aus seiner "Do-Not-Repeat" Liste, aussenden, um die Reaktion des Datensammlers im Gateway-Modus zu erhalten.

Ein Datensammler, der als Repeater arbeitet, muss dabei beachten, das im Funksystem eine Beschränkung der Funkkanalbelegung eines Funkgeräts gesetzlich vorgegeben ist. Dieser Duty-Cycle muss eingehalten werden und schränkt die Anzahl von "repeated" Funktelegrammen ein. Dies kann durch entsprechende Implementierung in dem Datensammler berücksichtigt werden.

Durch die Kennzeichnung von Endgerätetelegrammen über den "Hop-Counter" (im dem Sinne einer Kennzeichnung für das Wiederaussenden eines Endgeräte-Datentelegramms), der dann nicht wie bei direkt weitergeleiteten Endgerätetelegrammen den Wert 0, sondern (mindestens) den Wert 1 hat, kann die Zentrale den Ausfall einer Mobilfunk-Kommunikationsstrecke zwischen einem Datensammler und der Zentrale auswerten, da dann alle Endgeräte dieses Datensammlers als "repeated" gekennzeichnet sind. Somit kann eine Neuorganisation der Datenübertragung durch die Zentrale erfolgen, indem die über die Mobilfunk-Datenübertragung mit der Zentrale verbundenen Datensammler durch die Zentrale entsprechende Parameterdaten (bspw. eine Speicherliste oder eine Übertragungsliste, die später noch genauer erläutert werden) erhalten.

In einer Variante des erfindungsgemäß vorgeschlagenen Verfahrens kann ein Datensammler ohne Mobilfunk-Datenübertragung in dem oben definierten Sinne, d.h. für den eine Verbindung mit der Zentrale über die Mobilfunk-Kommunikationstrecke zu einem vorgesehenen Zeitpunkt nicht zustande kommt, alle von ihm empfangenen Datentelegramme in der Funkkommunikation des lokalen Funknetzes wieder aussenden. Dazu kann die Recheneinheit des Datensammlers diesen in einen Repeater-Modus (d.h. einen Modus für Datensammler ohne Mobilfunk-Datenübertragung) schalten. In diesem Modus speichert der Datensammler alle von Endgeräten empfangenen Datentelegramme zur Wiederaussendung in dem lokalen Netzwerk. Dies ist zwar hinsichtlich des Speicherplatzbedarfs in dem Datensammler und der benötigten Energie aufwendig, allerdings auch besonders sicher, da alle von ihm empfangenen Endgeräte-Datentelegramme auch dann an die Zentrale weitergleitet werden, wenn dieser Datensammler (im Repeater-Modus) der einzige Datensammler ist, der ein bestimmtes Endgerät empfängt.

In einer anderen Variante des erfindungsgemäß vorgeschlagenen Verfahrens kann ein Datensammler ohne Mobilfunk-Datenübertragung in dem oben definierten Sinne, d.h. für den eine Verbindung mit der Zentrale über die Mobilfunk-Kommunikationstrecke zu einem vorgesehenen Zeitpunkt nicht zustande kommt, nur Datentelegramme von durch den Datensammler verwalteten Endgeräten (bspw. über eine Speicherliste oder Übertragungsliste) in der Funkkommunikation des lokalen Funknetzes wieder aussenden. Zwischen diesen beschriebenen Varianten kann bspw. zeit- oder ereignisabhängig gewechselt werden.

Durch den Datensammler verwaltete Endgeräte sind im Rahmen der Offenbarung solche Daten, die durch den Datensammler aufgrund einer Vorgabe aus der Zentrale (während der Inbetriebnahme und/oder während des Betriebs) in dem Datensammler für eine mögliche Übertragung an die Zentrale gespeichert und/oder tatsächlich an die Zentrale übertragen werden. Diese Verwaltung kann bspw. von der Zentrale durch Parameterdaten, die bspw. als Dateien übertragen werden, vorgegeben werden. Solche Parameterdaten können während oder unmittelbar nach der Inbetriebnahme und/oder im Betrieb während einer zwischen Zentrale und Datensammler bestehenden Mobilfunk-Datenübertragung an den Datensammler übertragen werden. Gemäß einer bevorzugten Ausführung können dies entsprechende Listen (Speicherliste, Übertragungsliste) sein, die direkt eine Gerätekennung (bspw. eine Geräte-Funk-ID) der Endgeräte enthalten oder zumindest Information enthalten, mit denen die zu verwaltenden Endgeräte identifizierbar sind (bspw. eine Positionen in einer anderen die Geräte-Funk-ID beinhaltenden Liste). Derartige "Steuer-Listen" zur Verwaltung der im Datensammler zu verarbeitenden Endgeräte, insbesondere eine Speicher- und/oder Übertragungsliste, können vorzugsweise durch die Zentrale erzeugt und während der Mobilfunk-Datenübertragung (im regulären Betrieb, d.h. wenn der Datensammler eine Mobilfunk-Datenübertragung mit der Zentrale aufbauen kann) von der Zentrale an den Datensammler übertragen oder von dem Datensammler heruntergeladen werden.

In der hier beschriebenen Variante sendet ein Datensammler nur Datentelegramme von Endgeräten erneut aus, die in einer bei ihm lokal gespeicherten Liste zur Verwaltung der Endgeräte aufgeführt sind. Dies kann zumindest dann gelten, wenn eine solche Liste zur Verwaltung in dem Repeater-Modus vorliegt (bspw. erhalten in einer Zeit, da der Datensammler im Gateway-Modus war und eine Verbindung mit der Zentrale über die Mobilfunk-Kommunikationstrecke zustande gekommen war). Liegt eine solche Liste zur Verwaltung nicht vor, können im Repeater-Modus alle empfangenen Datentelegramme (d.h. unabhängig von dem aussendenden Endgerät) wieder in dem lokalen Funknetz ausgesendet werden.

Um die anderen Teilnehmer im lokalen Funknetz von dem Ausfall seiner Mobilfunk-Datenübertragung zu der Zentrale zu informieren, kann ein Datensammler ohne Mobilfunk-Datenübertragung ein Status-Datentelegramm (Statustelegramm, Fehlerstatus-Telegramm) aussenden mit der Information, dass er keine Verbindung über die Mobilfunk-Kommunikationsstrecke (d.h. keine Mobilfunk-Datenübertragung) zu der Zentrale aufbauen kann. Ein solches Status-Datentelegramm kann durch benachbarten Datensammler (in Funkreichweite) empfangen und an die Zentrale weitergeleitet werden, so dass die Zentrale durch Umorganisation des Auslesens der Daten, bspw. durch eine geänderte Speicher- und/oder Übertragungsliste das zuverlässige Funktionieren des Fernablesesystems sicherstellen kann.

Eine andere Variante kann sein, dass automatisiert ein Auftrag für einen Serviceeinsatz, bspw. die Beauftragung eines Monteurs zum Ändern der Montageposition des Datensammlers oder Austausch des Datensammlers, durch die Zentrale angelegt wird, sobald ein Status-Datentelegramm eines Datensammlers ohne Mobilfunk-Datenübertragung in der Zentrale ankommt. Informationen in dem Datensammler Status-Datentelegramm beinhalten die Datensammler-Gerätekennung (bspw. eindeutige Geräte-ID bzw. Seriennummer), und können den Datensammler-Batteriestatus und/oder den bisherigen (kumulierten) Ladungsverbrauch, das Inbetriebnahmedatum, eine Empfangsinformationsliste (mit den bspw. zuletzt durch den Datensammler empfangenen Endgeräten, insbesondere nur mit den Endgeräte-IDs), eine Speicherliste (mit den durch die Zentrale vorgegebenen Endgeräten, deren Datentelegramme zu einer möglichen Weiterleitung an die Zentrale in dem Datensammler gespeichert werden sollen, bspw. bis zu einem möglichen Abruf durch die Zentrale oder dem Empfangen eines neuen Datentelegramms desselben Endgeräts), eine Übertragungsliste (mit den durch die Zentrale vorgegebenen Endgeräten, deren Datentelegramme tatsächlich an die Zentrale weitergeleitet werden sollen bzw. das letzte Mal wurden) umfassen.

Die zum Synchronfunkempfang der Endgeräte erforderlichen Informationen (Sendezeitpunkte) können ebenfalls mit den Status-Datentelegrammen im Funknetzwerk vorzugsweise mit einem einzigen oder nur wenigen Status-Datentelegrammen verbreitet werden.

Erfindungsgemäß kann vorgesehen sein, dass ein Datensammler mit Mobilfunk-Datenübertragung in dem weiter oben definierten Sinne, d.h. für den eine Verbindung mit der Zentrale über die Mobilfunk-Kommunikationstrecke zu einem vorgesehenen Zeitpunkt zustande kommt, ein Status-Datentelegramm über die Funkkommunikation des lokalen Funknetzes aussendet, bspw. mit aktuellen Zustandsinformationen zum Datensammler selbst (wie Batteriestatus, Datum und Uhrzeit), mit Informationen, die zum Synchronfunkempfang der Endgeräte (Synchronisations-Informationen) notwendig sind. Ggf. kann in dieses Status-Datentelegramm erfindungsgemäß auch mit dem Do-Not-Repeat-Datentelegramm zusammengefasst werden, so dass die Informationen des Statustelegramms mit den Synchronisations-Informationen und den Informationen zu den empfangbaren Datensammlern und/oder deren nicht weiterzuleitenden Datentelegrammen in einem Datentelegramm zusammengefasst w.

Die Synchronisations-Informationen können bspw. die Uhrzeit, das Datum, die zeitliche Lage (Zeitpunkt) und Dauer eines Empfangszeitfensters sein, die im Rahmen der Neuorganisation des lokalen Funknetzes auch durch andere Datensammler, insbesondere Datensammler ohne Mobilfunk-Datenübertragung, genutzt werden können. Weitere für ein Synchronfunknetzwerk nützliche Betriebsparameter wie die aktuelle Gerätetemperatur oder die Temperatur der Recheneinheit im Datensammler, welche für eine Quarzdrift-Kompensationsberechnung und damit zur Verbesserung der Uhrzeitsynchronität der Teilnehmer im Synchronfunk verwendet werden können, können in einem Status-Datentelegramm ausgesendet werden.

In diesem Zusammenhang kann vorgesehen sein, dass ein Datensammler ohne Mobilfunk-Datenübertragung durch Datensammler mit Mobilfunk-Datenübertragung in Funkreichweite ausgesendete Status-Datentelegramme empfängt und das Wiederaussenden der Datentelegramme bezüglich eines möglichen Empfangs durch zumindest einen (oder ggf. mehrere der) benachbarten Datensammler (in Funkreichweite) optimiert, d.h. dass das Wiederaussenden der Datentelegramme an die erhaltenen Synchronisations-Informationen derart angepasst wird, dass ein Empfang der wieder ausgesendeten Datentelegramme durch den bzw. einen benachbarten Datensammler zum prädizierten Empfangszeitpunkt bzw. im prädizierten Empfangszeitfenster möglich ist.

Zum Beispiel kann der Datensammler mit Mobilfunk-Datenübertragung zeitgleich zu einem Datensammler ohne Mobilfunk-Datenübertragung sein Empfangszeitfenster öffnen und damit die für diesen Empfangszeitpunkt prädizierten Endgerätetelegramme direkt, das bedeutet ohne den als Repeater funktionierenden Datensammler, empfangen. Der Datensammler mit Mobilfunk-Datenübertragung kann die Empfangshäufigkeit, also die Anzahl der Empfangszeitfenster pro Tag (vorzugsweise das Empfangsfenster für den asynchronen Funkempfang), variieren, insbesondere erhöhen.

Der Datensammler ohne Mobilfunk-Datenübertragung kann die Zeitpunkte für das Wiederaussenden der Endgerätetelegramme derart legen, dass ein Datensammler in Funkreichweite des lokalen Funknetzes sein Empfangszeitfenster geöffnet hat. Dies kann das für den prädizierten Endgeräteempfangszeitpunkt vorgesehene Empfangszeitfenster sein, oder auch das später noch genauer erläuterte Empfangszeitfenster für den asynchronen, also nicht prädizierten, Empfang von Endgerätetelegrammen sein.

Erfindungsgemäß können auch Datensammler mit einer Mobilfunk-Datenübertragung entsprechende Status-Datentelegramme benachbarter, also von in Funkreichweite im lokalen Funknetz liegenden, Datensammler empfangen, damit die für den Synchron-Funkempfang der Endgeräte erforderliche Synchronisations-Informationen bereits lokal in jedem oder einem entsprechenden Datensammler vorliegen und sofort verfügbar ist, sofern ein Datensammler aufgrund einer Störung vom Gateway-Modus in den Repeater-Modus wechseln sollte. Sofern die aktuellen Synchron-Funk-Parameter zu einem benachbarten Datensammler in Funkreichweite in einem Datensammler vorliegen, können Status-Datentelegramme durch einen Datensammler genau dann ausgesendet werden, wenn die benachbarten Datensammler empfangsbereit sind, also ihre Empfangsfenster geöffnet haben. Dadurch können wiederholte Aussendungen vermieden oder zumindest in der Häufigkeit reduziert werden.

Das Optimieren der Wiederaussendung von Endgeräte-Datentelegrammen im Repeater-Modus, insbesondere ein nicht unnötig häufiges Wiederaussenden, trägt maßgeblich zu einer besseren Energiebilanz (Batterieverbrauch) des Datensammlers bei und kann bspw. so ausgerichtet bzw. konzipiert sein, dass ein Datensammler, obwohl er dauerhaft im Repeater-Modus betrieben wird, die vorgesehene Betriebsdauer (von bspw. mehr als 10 Jahren) trotz der höheren Batteriebelastung durch zusätzliche Funkaussendungen im Repeater-Modus erreichen wird, so dass ein dauerhafter Betrieb im Repeater-Modus nicht zwangsläufig einen Serviceeinsatz zum Batterietausch oder Gerätetausch erfordert. Dazu trägt zwar auch bei, dass die Mobilfunkübertragung, die einen hohen Stromverbrauchsanteil verursacht, nicht durchgeführt werden kann. Eine zusätzliche Optimierung zum Erreichen der geforderten Mindest-Einsatzdauer in der zuvor mit zumindest einem Teil der zuvor erläuterten Merkmalen wird häufig erforderlich oder zumindest vorteilhaft sein.

Vorzugsweise wird der Repeater-Modus (insbesondere durch Einstellen des Sendezeitpunkts, der Sendehäufigkeit der weiterzuleitenden Datentelegramme oder dergleichen) so optimiert, dass der Energieverbrauch des Datensammlers im Repeater-Modus dem Energieverbrauch des Datensammlers im Gateway-Modus entspricht, da die Lebensdauer (Einsatzdauer) für diesen Fall geplant wurde. Das Einstellen des Sendezeitpunkts auf ein Empfangszeitfenster eines benachbarten Datensammlers, in dem dieser ohnehin mehrere Datentelegramme von verschiedenen Endgeräten empfängt (bspw. das später beschriebene Asynchron-Empfangszeitfenster), macht das Empfangen der "zusätzlich" wieder ausgesendeten Datentelegramme in dem "Alternativen"-Datensammler (Repeater) ohne großen zusätzlichen Energiebedarf für den Empfang möglich. Wenn der Datensammler im Repeater-Modus selbst ein Asynchron-Empfangszeitfenster öffnet, um weiterhin an dem lokalen Funknetz teilzunehmen und ggf. den Empfang von Endgeräte-Datentelegrammen zu synchronisieren, können die Zeitpunkte für das Wieder-Aussenden der Datentelegramme so gewählt werden, dass diese nicht mit Datentelegrammen der Endgeräte in Funkreichweite kollidieren, deren Sendezeitpunkte aus den während des Asynchron-Empfangszeitfensters empfangenen Datentelegrammen ableitbar sind.

Erfindungsgemäß ist vorgesehen, dass auch das Wiederaussenden von Datentelegrammen im Repeater-Modus des Datensammlers im Sendezyklus der Endgeräte erfolgt, mit denen diese die Datentelegramme aussenden. Hierzu finden sich im Folgenden noch weitere Erläuterungen, auf die verwiesen wird. Bei einem im Grundtakt unveränderten Sendezyklus lässt sich ein Kollisionen vermeidender Versatz der Sendezeitpunkte der Datentelegramme einfach durch Definition eines zufälligen oder pseudozufälligen ("random") zeitlichen Versatzes realisieren.

Erfindungsgemäß findet der Empfang der Datentelegramme von Endgeräten (sowie ggf. auch der wiederausgesendeten Datentelegramme, die in diesem Sinne auch Datentelegramme von Endgeräten sind) durch den Datensammler in einem kombinierten Asynchron- und Synchronempfang statt, wobei ein Datensammler in einem ersten Turnus (bspw. einmal oder zweimal pro Monat oder alle ein, zwei, drei oder vier Wochen oder in anderen sinnvollen durch den Fachmann festgelegten Zeitabständen, bspw. einmal pro Tag für Liegenschaften, in den kein Synchronempfang vorgesehen ist) ein Asynchron-Empfangszeitfenster öffnet, in dem alle in dem Zeitraum in Funkreichweite ausgesendeten Datentelegramme empfangen werden, und in einem zweiten Turnus ein Synchron-Empfangszeitfenster öffnet, in dem gezielt das Datentelegramm eines ausgewählten (mit dem Datensammler synchronisierten) Endgeräts empfangen wird.

Der zweite Turnus des Synchron-Empfangszeitfenster ergibt sich durch die Synchronisation mit den Sendezeitpunkten des für den Synchronempfang ausgewählten Endgeräts (synchronisiertes Endgerät). Die Dauer des Synchron-Empfangszeitfensters kann vorzugsweise gerade so lange gewählt werden, dass das eine Datentelegramm des ausgewählten (synchronisierten) Endgeräts gerade empfangen werden kann. Dies ist möglich, weil das Datentelegramm des synchronisierten Endgeräts gerade zu dem synchronisierten, d.h. für den Datensammler vorhersagbaren (prädizierbaren), Sendezeitpunkt ausgesendet wird.

Die Dauer des Asynchron-Empfangszeitfensters ist erfindungsgemäß wesentlich länger als die Dauer des Synchron-Empfangszeitfensters. Daher wird, zur Unterscheidung zum Synchronfunkempfangs-Zeitfenster, dieses auch als "Dauerempfangsphase" bezeichnet. Solche Dauerempfangsphasen können abhängig von Betriebszuständen unterschiedlich lange gestaltet sein.

Ist der Datensammler in einem Inbetriebnahme-Betriebszustand, so kann solch ein Dauerempfang über mehrere Stunden, bspw. 2 Stunden erfolgen, um die Funksituation in der Umgebung des Datensammlers bestmöglich aufzunehmen. Es ist auch möglich, ein solches Dauerempfangsfenster kürzer zu gestalten, damit der Datensammler beispielsweise nach 15 Minuten die von ihm bisher empfangenen Endgeräte zur Zentrale meldet und so der Inbetriebnahmeablauf durch eine Funknetz-Qualitätsprüfung Vor-Ort unterstützt wird, bspw. durch eine Rückmeldung an den Monteur zur Unterstützung einer Qualitätsprüfung zum Funknetzwerk, einem sogenannten "On-Site-Check". Stellt der Datensammler während der Inbetriebnahme fest, dass er keine Mobilfunk-Datenübertragung aufbauen kann, so kann er das Dauerempfangsfenster um eine weitere Empfangsdauer, bspw. 15 Minuten, verlängern und danach einen erneuten Verbindungsaufbau versuchen. Dieses Vorgehen kann solange erfolgen, bis die maximale Anzahl von sukzessiven Dauerempfangsphasen erreicht ist. Nach Ende der Inbetriebnahme wechselt der Datensammler entweder vom Inbetriebnahme-Modus in den Gateway-Modus, sofern er eine Mobilfunk-Datenübertragung erfolgreich gestalten konnte, ansonsten wechselt er in den Repeater-Modus.

Typischerweise senden die Endgeräte ihre asynchronen Datentelegramme in einem Sendezyklus aus, der zufällig oder pseudozufällig um eine mittlere Zykluszeit (als Abstand zwischen zwei aufeinander folgenden Aussendungen eines Datentelegramms durch das Endgerät) variiert. Die Dauer des Asynchron-Empfangszeitfensters beträgt daher mindestens das Zweifache der mittleren Zykluszeit. Hierdurch wird - normale Empfangsbedingungen vorausgesetzt - ein zweifacher Empfang des Datentelegramms eines Endgeräts des Asynchron-Empfangszeitfensters erreicht, der für einen sicheren Empfang der Endgeräte-Datentelegramme erforderlich ist bzw. angestrebt wird. Da bzw. soweit es sich bei den Datensammlern um batteriebetriebene Geräte handelt, sollte die Dauer des (normalen) Asynchron-Empfangszeitfensters nicht mehr als das 5-fache der Zykluszeit betragen, weil lange Empfangszeitfenster einen hohen Energiebedarf haben und die zur Energieversorgung eingesetzten Batterien sehr stark belasten. Vor diesem Hintergrund kann die Dauer der Asynchron-Empfangszeitfenster und der Turnus zum Öffnen der Asynchron-Empfangszeitfenster insbesondere auch an den damit verbundenen Energieverbrauch und die angestrebte Betriebsdauer der Datensammler ohne Batteriewechsel (und damit Serviceeinsatz vor Ort) angepasst werden.

Im Rahmen eines von der Zentrale vorgenommenen Energiemanagements können die Dauer der Asynchron-Empfangszeitfenster und der Turnus zum Öffnen der Empfangszeitfenster auch abhängig von einer aktuellen Energiebilanz angepasst werden, bspw. durch Übersendung entsprechender Parameterdateien von der Zentrale an den Datensammler im Gateway-Modus.

Die zuvor ausführlich beschriebenen Asynchron-Empfangszeitfenster können erfindungsgemäß auch angewendet werden, wenn die Datensammler ausschließlich in einem asynchronen Empfangsmodus arbeiten. In diesem Fall werden die Datentelegramme der Endgeräte nur in dem Asynchron-Empfangszeitfenster (bspw. alle zwei Wochen) empfangen und nach dem Empfang über die Mobilfunk-Kommunikationsstrecke an die Zentrale weitergeleitet. Dies ist vorteilhaft, da in dem Asynchron-Empfangszeitfenster sowohl die Endgeräte-Datentelegramme empfangen werden können, die als (EN13757-4 - konformes) Asynchron-Funktelegramm ausgesendet werden, als auch die Endgeräte-Datentelegramme, die als (OMS-konformes) Synchron-Funktelegramm ausgesendet werden. Der Energieaufwand für den zusätzlichen synchronen Empfang entfällt, so dass dieser rein asynchrone Empfangsmodus bspw. auch dann verwendet werden kann, wenn die Energiebilanz des Datensammlers während des Betriebs einen besonders energiesparenden Betrieb erfordert, um die gewünschte Betriebsdauer ohne Batterietausch zu ermöglichen. In diesem Fall kann ein Umschalten auf den Asynchron-Empfang bspw. mittels von der Zentrale übermittelten Parameterdaten angestoßen werden.

In einer bevorzugten Variante des kombinierten Asynchron- und Synchronempfangs durch die Datensammler kann erfindungsgemäß vorgesehen sein, dass die während des Asynchron-Zeitfensters empfangenen Datentelegramme zum Synchronisieren von Synchron-Empfangszeitfenstern für den Empfang von Datentelegrammen eines ausgewählten (synchronisierten) Endgeräts verwendet werden.

Im Rhythmus des "Dauerempfangs-Turnus" (erster Turnus), d.h. nach dem Empfang eines Datentelegramms im Asynchron-Empfangszeitfenster, kann auch eine Synchronisation mit einzelnen Endgeräten wiederhergestellt werden, wenn diese zwischenzeitlich verloren gegangen ist. Dabei wird der (erste) Dauerempfangs-Turnus vorzugsweise so gewählt, dass das Fehlen von Daten innerhalb eines Dauerempfangs-Turnusintervalls nicht zu Fehlern im System, bspw. bei der Verbrauchserfassung, führt, weil eine Aktualisierung der Verbrauchswerte im Turnusintervall für die die Verbrauchsdaten verarbeitende Anwendung ausreichend ist.

Gemäß einer bevorzugten Ausführungsform des Verfahrens kann vorgesehen sein, dass ein Datensammler ohne Mobilfunk-Datenübertragung in (bspw. bei der Fertigung, bei der Inbetriebnahme oder Wartung und/oder durch eine Kommunikation mit der Zentrale parametrierbar) vorgegeben Zeitabständen erneut eine Verbindung zu der Zentrale über die Mobilfunk-Kommunikationsstrecke aufzubauen versucht. Dies kann bspw. zu dem im regulären Betrieb nächsten vorgesehenen Zeitpunkt für den Aufbau einer Mobilfunk-Datenübertragung erfolgen.

Gelingt die Verbindung, wechselt der Datensammler von dem Repeater-Modus zurück in den Gateway-Modus und leitet die Daten über die Mobilfunk-Kommunikationsstrecke an die Zentrale weiter. Weil die Überprüfung des Verbindungsaufbaus dann das Zustandekommen der Verbindung anzeigt, wird damit auch das Wiederaussenden der Datentelegramme in das lokale Funknetz (über die in dem lokalen Funknetz verwendete Funkkommunikation) automatisch beendet, ohne dass zwischen dem Repeater-Modus und Gateway-Modus durch einen gesonderten Steuerbefehl umgeschaltet werden muss. Temporäre Störungen werden damit automatisch und ohne von außen vorgegebene Steuerbefehle behoben, sobald die Mobilfunk-Kommunikationstrecke wiederaufgebaut werden kann.

Die Erfindung betrifft ferner einen Datensammler mit einem Sendeempfänger (Transceiver) zum Empfangen und Senden von Datentelegrammen in einem lokalen Funknetz in einem Gebäude und mit einem Mobilfunk-Modem zum Aufbau einer Mobilfunk-Datenübertragung über eine Mobilfunk-Kommunikationsstrecke zu einer entfernten Zentrale sowie mit einer Recheneinheit, die zum Empfangen und Senden von Datentelegrammen in dem lokalen Funknetz über den Sendeempfänger und zum Aufbau der Mobilfunk-Datenübertragung über das Mobilfunkmodem eingerichtet ist. Erfindungsgemäß ist die Recheneinheit des Datensammlers weiter dazu eingerichtet, die durch den Datensammler ausgeführten Verfahrensschritte des vorbeschriebenen Verfahren oder Teile davon auszuführen. Zu den ausgeführten Verfahrensschritten gehören insbesondere:
- Empfangen der Datentelegramme von Endgeräten in Funkreichweite des Datensammlers (d.h. mit anderen Worten der von Endgeräten ausgesandten und im Sendeempfänger des Datensammlers empfangbaren Datentelegramme);
- Aufbauen der Mobilfunk-Kommunikationsstrecke zu der entfernten Zentrale
- Überprüfen des Verbindungsaufbaus und Weiterleiten der Daten (bspw. als die empfangenen Datentelegramme oder in aus den Datentelegrammen abgeleiteter Form) an die entfernte Zentrale, wenn die Mobilfunk-Datenübertragung zustande kommt; und
- Wiederaussenden der empfangenen Datentelegramme über die Funckommunikation des lokalen Funknetzes, wenn die Mobilfunk-Datenübertragung nicht zustande kommt.

Der Kern des erfindungsgemäßen Verfahrens wird dabei alleine in dem Datensammler bzw. dessen Recheneinheit umgesetzt. Voraussetzung für ein tatsächliches Übertragen der Daten aus dem lokalen Funknetz an die Zentrale ist dabei natürlich, dass (irgendwie geartete Endgeräte als Teilnehmergeräte des lokalen Funknetzes) Datentelegramme aussenden, die durch den Datensammler entsprechend empfangen werden können und dass die Zentrale die über die Mobilfunk-Kommunikationsstrecke durch den Datensammler weitergeleiteten Datentelegramme auch empfängt. Entsprechendes gilt für die durch den Datensammler im Repeater-Modus wieder ausgesandten Datentelegramme, die durch einen benachbarten Datensammler in Funkreichweite empfangen werden müssen. Mit anderen Worten ist für das Zustandekommen der Kommunikation natürlich immer die entsprechende Mitwirkung der entsprechenden Kommunikationspartner notwendig. Diese beschränkt sich im vorliegenden Fall aber darauf, die zu übertragenden Daten im lokalen Funknetz als Datentelegramme auszusenden (Endgeräte) und die weitergeleiteten Daten über die Mobilfunk-Kommunikationsstrecke zu empfangen (Zentrale), wobei durch ein Senden von Parameterdaten durch die Zentrale über die Mobilfunk-Kommunikationsstrecke eine Beeinflussung der Datensammler (optional) möglich ist, indem die Datensammler die Parameterdaten empfangen und auswerten.

Entscheidend ist, dass die Datensammler - unabhängig davon, ob Datentelegramme durch Endgeräte in das lokale Funknetz ausgesendet werden - dazu eingerichtet sind, empfangene Datentelegramme entsprechend dem vorgeschlagenen Verfahren zu empfangen und an die Zentrale weiterzuleiten bzw. an benachbarte Datensammler zur Weiterleitung an die Zentrale wieder auszusenden. Sofern die Datentelegramme dann in der Zentrale empfangen werden, findet die Übertragung tatsächlich statt. Der Ablauf des Verfahrens zur Übertragung, und damit das Übertragen von in dem lokalen Netz als Datentelegramme vorliegenden Daten aus dem lokalen Netz über die Mobilfunk-Kommunikationsstrecke hin zu der Zentrale wird alleine durch einen oder mehrere Datensammler ausgeführt, indem durch den Datensammler die empfangbaren Daten über die Mobilfunk-Datenübertragung (unmittelbar oder mittelbar über einen benachbarten Datensammler) der Zentrale zur Verfügung stellt. Dies wird unter der Durchführung des vorgeschlagenen Verfahrens durch den Datensammler verstanden.

Die Recheneinheit des Datensammlers kann insbesondere einen Datenspeicher aufweisen, in dem die empfangenen Datentelegramme (sowohl von den Endgeräten als auch von benachbarten Datensammlern ohne Mobilfunkverbindung) speicherbar sind. Die Recheneinheit kann im Rahmen der Durchführung des erfindungsgemäßen Verfahrens dazu eingerichtet sein, alle empfangenen Datentelegramme oder die Datentelegramme von Endgeräten zu speichern, die in einer in der Recheneinheit hinterlegten (insbesondere in dem Datenspeicher gespeicherten und/oder in einen Arbeitsspeicher der Recheneinheit geladenen) Speicherliste und/oder Übertragungsliste aufgeführt sind. Diese Datentelegramme können unverändert und/oder mit einer Kennung als "wieder ausgesendete Datentelegramme" (bspw. Repeated-Flag oder HOP-Counter) versehen wieder ausgesendet werden. Vorzugsweise sind die empfangenen Datentelegramme (zumindest deren Dateninhalt in Abgrenzung zu dem kommunikationstechnisch notwendigen Telegrammheader mit der Geräte-Identifikation) verschlüsselt und durch den Datensammler nicht entschlüsselbar, so dass die empfangenen Datentelegramme sowohl bei dem Weiterleiten an die Zentrale als auch bei dem Wiederaussenden in das lokale Funknetz unverändert ausgesendet werden. Mit dem unveränderten Aussenden ist gemeint, dass der Dateninhalt weder entschlüsselt noch auswertet oder verändert wird oder wurde.

Vorzugsweise ist der Datensammler erfindungsgemäß batteriebetrieben.

Zur Organisation der Funkkommunikation in dem lokalen Funknetz ist die Recheneinheit des Datensammlers dazu eingerichtet, in einem ersten Turnus Asynchron-Empfangszeitfenster zu öffnen, in denen alle empfangbaren Datentelegramme empfangen werden, wobei die Dauer der Asynchron-Empfangszeitfenster derart bemessen ist, dass in einem definierten (und bekannten) Sendezyklus durch Endgeräte ausgesandten Datentelegramme mehrfach (insbesondere mindestens zweimal, vorzugsweise mindestens dreimal und optional nicht mehr als fünfmal) empfangen werden bzw. empfangbar sind. Dies bedeutet, dass das Asynchron-Empfangszeitfenster so lang bemessen ist, dass während der Dauer des Asynchron-Empfangszeitfensters eine entsprechende Anzahl von Datentelegrammen durch ein Endgerät ausgesendet wird, das dann grundsätzlich empfangbar ist - sofern die (zeitlich ggf. auch schwankende) Funkreichweite dies zulässt und/oder es nicht zu Störungen bei der Funkübertragung, bspw. durch Kollisionen mit anderen Funktelegrammen, kommt.

In Weiterbildung des vorgeschlagenen Datensammlers kann die Recheneinheit des Datensammlers dazu eingerichtet sein, aus den empfangenen Datentelegrammen (aller oder eines ausgewählten Teils) der Endgeräte Synchronisationsinformationen von Endgeräten im Synchron-Funk abzuleiten und sich mit diesen Endgeräten zu synchronisieren, wobei für den Empfang von Datentelegrammen der synchronisierten Endgeräte Synchron-Empfangszeitfenster während der Aussendung der Datentelegramme geöffnet werden, deren Dauer derart bemessen ist, dass gerade das Datentelegramm des synchronisierten Endgeräts empfangen wird.

Dies kann für mehrere dann synchronisierte Endgeräte durchgeführt werden, insbesondere diejenigen Endgeräte, deren Daten an die Zentrale übertragen werden sollen. Dies können die Datentelegramme aller empfangen Endgeräte sein, oder nur die Datentelegramme von dem Datensammler bekannten (bspw. in Speicherlisten und/oder Übertragungslisten durch die Zentrale bekanntgegebenen) Endgeräten. Hierdurch ist es möglich, bei einem geringeren Energieverbrauch für den Datensammler eine gewünschte Empfangs- bzw. Übertragungshäufigkeit für Datentelegramme ausgewählter Endgeräte zur Zentrale zu erreichen, weil die Synchron-Empfangszeitfenster signifikant kürzer sind als die Asynchron-Empfangszeitfenster und damit entsprechend weniger Energie verbrauchen.

Ein erheblicher Vorteil des erfindungsgemäß vorgeschlagenen Verfahrens und eines dieses Verfahren ausführenden Datensammlers (soweit die beschriebenen Verfahrensschritte in der beschriebenen Weise durch den Datensammler ausgeführt werden) liegt darin, dass auch ein Datensammler, dessen Mobilfunk-Datenübertragung zu der Zentrale über die Mobilfunk-Kommunikationstrecke nicht aufgebaut werden kann, wichtiger Bestandteil des Systems bleibt und dazu beträgt, dass alle erforderlichen Daten von Endgeräten aus dem lokalen Funknetz eines Gebäudes zu einer entfernten Zentrale übertragen werden. Indem ein solcher Datensammler selbsttätig auf eine Repeaterfunktion (Repeater-Modus) umschaltet, wird das System insgesamt robuster. Außerdem erhält die Zentrale weiterhin Informationen der Endgeräte (wie insbesondere Status-Informationen und Nutz-Daten(Payload)) sowie eine Statusmeldung betroffener Datensammler, die in der Zentrale zu einer Umorganisation der Datenübertragung genutzt werden können, um Datenübertragung aus einem Gebäude mit den installierten Endgeräten auch dann über die gesamte Betriebsdauer (möglichst ohne einen teuren Serviceeinsatz bspw. zum Batterietausch oder Tausch eines Datensammlers) zu ermöglichen.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Figur 1: schematisch die Ausführung des vorgeschlagenen Verfahrens gemäß einer Ausführungsform anhand einer Prinzip-Aufbauskizze;
- Figur 2: einen schematischen Ablaufplan einer Ausführungsform des vorgeschlagenen Verfahrens;
- Figur 3: die für einen Datensammler vorgeschlagene Kombination aus Asynchron- und Synchronempfang in einem Überblickszeitschema gemäß einer Ausführungsform;
- Figur 4: die Weiterleitung der Endgerätetelegramme in einem Überblickszeitschema gemäß einer weiteren Ausführungsform; und
- Figur 5: die Weiterleitung der Endgerätetelegramme in einem Überblickszeitschema gemäß einer weiteren Ausführungsform.

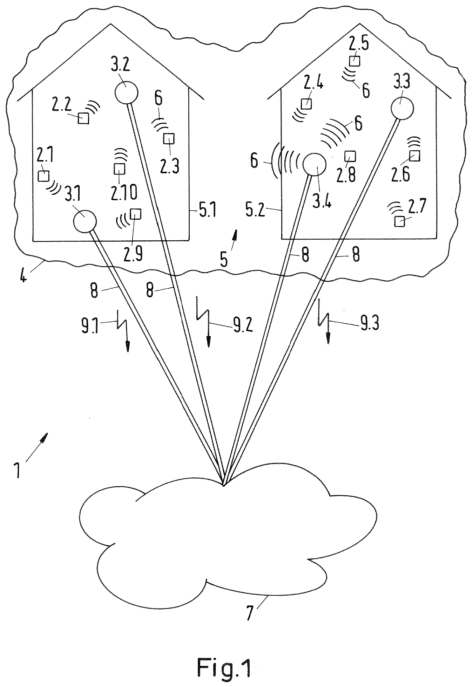

Anhand der Prinzip-Aufbauskizze gemäß Figur 1 wird nachfolgend eine Ausführungsform des vorgeschlagenen Verfahrens zum Übertragen von Daten aus einem lokalen Funknetz in einem Gebäude zu einer entfernten Zentrale beschrieben. Bei dem in der Aufbauskizze dargestellten System kann es sich beispielsweise um ein Verbrauchserfassungssystem 1 handeln, bei dem Verbrauchserfassungsgeräte als Endgeräte 2 Verbrauchsdaten erfassen und diese Daten an Datensammler 3 übertragen. Die Datensammler 3 übertragen Daten der Endgeräte 2 dann an eine Zentrale 7 weiter, in der die Daten der Endgeräte 2 gespeichert und weiterverarbeitet werden, bspw. unter anderem zur Erstellung einer Heizkostenabrechnung.

Derartige Systeme sind als sogenannte AMR-Systeme (Automated Meter Reading) bekannt und können als Verbrauchserfassungsgeräte Heizkostenverteiler, Zähler für thermische Energie, Wasserzähler, Gaszähler, Elektrozähler oder dergleichen umfassen. Weitere Endgeräte 2 können aber auch sonstige Sensorgeräte sein, die beispielsweise bestimmte Umgebungseigenschaften ermitteln und als Daten in vergleichbarer Weise über die Datensammler 3 an die Zentrale 7 weiterleiten. Ein Beispiel für derartige Endgeräte 2 können Rauchwarnmelder sein, die häufig in AMR-Systemen miterfasst sind und überwacht werden.

Grundsätzlich ist die Erfindung jedoch nicht auf Verbrauchserfassungssysteme 1 beschränkt, sondern kann allgemein eingesetzt werden, wenn Daten von an einem lokalen Funknetz 4 teilnehmenden Endgeräten 2 an eine außerhalb des lokalen Funknetzes 4 liegende Zentrale 7 übermittelt werden sollen. Typischerweise finden sich derartige lokale Funknetze 4 in Liegenschaften 5, wobei ein lokales Funknetz 4 durchaus mehrere Gebäude oder Gebäudeteile 5.1 und 5.2 umfassen kann. Die Gebäude 5.1 und 5.2, die durch das lokale Funknetz 4 abgedeckt sind, werden hier zusammen als Liegenschaft oder Gebäude 5 bezeichnet. Die Gebäudeteile 5.1 und 5.2 müssen nicht baulich zusammenhängen, sondern können auch unterschiedliche Baueinheiten sein, beispielsweise mehrere, üblicherweise benachbarte Häuser.

In dem dargestellten Beispiel sind in den beiden Gebäudeteile 5.1 und 5.2 der Liegenschaft bzw. des Gebäudes 5 insgesamt zehn Endgeräte 2.1 bis 2.10 und insgesamt vier Datensammler 3.1 bis 3.4 dargestellt, die zusammengefasst als Endgeräte 2 bzw. Datensammler 3 bezeichnet werden. Sofern für die Beschreibung bestimmte Datensammler oder Endgeräte bezeichnet werden sollen, wird die Notation 3.X bzw. 2.X verwendet, die sich X dann auf das konkrete jeweilige Gerät bezieht. Entsprechendes gilt für eine Mobilfunk-Datenübertragung 9.X vom einem Datensammler 3.X an eine Zentrale 7.

Jedes Endgerät 2 sendet seine Daten in Form von Datentelegrammen (Endgeräte-Datentelegramme) in einer Funkkommunikation 6 des lokalen Funknetzes 4 aus. Dies ist jeweils durch drei gebogene, parallel angeordnete Striche in Figur 1 symbolisiert, wobei der Übersichtlichkeit halber nicht für jede Funkkommunikation 6 das Bezugszeichen "6" eingetragen ist. Jedes Symbol der parallel angeordneten drei Striche symbolisiert aber die Aussendung von Daten in einem Datentelegramm durch ein Endgerät 2 an einen Datensammler 3 in der Funckommunikation 6.

In Funkreichweite eines Endgeräts 2 installierte Datensammler 3 empfangen die durch die Endgeräte 2 ausgesendeten Datentelegramme in dem lokalen Funknetz 4.

Zu vorgegebenen bzw. vorgebbaren Zeitpunkten leiten die Datensammler 3 die Daten, die sie als Datentelegramme von den Endgeräten 2 empfangen haben, über eine Mobilfunk-Kommunikationsstrecke 8 an die Zentrale 7 weiter. Dazu weist jeder Datensammler 3 vorzugsweise ein nicht dargestelltes Mobilfunk-Modem auf, mit dem der Datensammler 3 über die Mobilfunk-Kommunikationsstrecke 8 zu den vorgegebenen Zeitpunkten versucht, eine Mobilfunk-Datenübertragung 9 zu der Zentrale 7 aufzubauen. Diese Mobilfunk-Datenübertragung 9 kann beispielsweise eine mobile Datenverbindung über GSM, GPRS, LTE, oder eine andere, vorzugsweise mit einem Internet-Datenprotokoll kompatible mobile Datenverbindung, sein. Sobald die Mobilfunk-Datenübertragung 9 zwischen dem Datensammler 3 und der Zentrale 7 besteht, kann der Datensammler 3 die von den Endgeräten 2 empfangenen Datentelegramme an die Zentrale 7 weiterleiten (oder anstelle des Weiterleitens der Datentelegramme auch aus den Datentelegrammen extrahierte Daten übertragen, was auch mit einem Weiterleiten der Daten oder Datentelegramme gemeint sein kann) und/oder Parameterdaten von der Zentrale 7 auf den Datensammler 3 herunterladen. Grundsätzlich können über die Mobilfunkverbindung 8 entsprechend dem vorgegebenen Übertragungsprotokoll beliebige Daten zwischen dem Datensammler 3 und der Zentrale 7 ausgetauscht werden.

Dabei kann die Mobilfunk-Datenübertragung 9 grundsätzlich eine direkte Kommunikationsverbindung zwischen dem Datensammler 3 und dem IT-System der Zentrale 7, beispielsweise einem Server-Netzwerk, aufbauen, so dass eine direkte Übertragung in das IT-System beispielsweise eines Abrechnungsdienstleisters (im Falle eines AMR-Systems) erfolgen kann.

In dem in Figur 1 dargestellten Beispiel ist die Zentrale 7 allerdings als eine Art Wolke dargestellt. Dies symbolisiert, dass das "Übertragen in die Zentrale 7" auch über Cloud-Speicher (hier auch als Zentrale 7 bezeichnet) erfolgen kann, auf den der Datensammler 3 zugreift. Der Datensammler 7 speichert die weitergeleiteten Daten der Endgeräte 2 dort ab, ohne dass er eine Kommunikationsverbindung mit der die Daten weiterverarbeitenden Zentrale 7 habe. In diesem Fall ist die Zentrale 7 im Sinne des Cloud-Speichers technisch also von dem IT-System des Abrechnungsdienstleisters getrennt. Das IT-System des Abrechnungsdienstleisters kann über eine in Figur 1 nicht dargestellte Datenverbindung ähnlich wie der Datensammler 3 auf den Cloud-Speicher der Zentrale 7 zugreifen und die dort gespeicherten Daten zur Weiterverarbeitung abholen. In diesem Fall kommt es also zu keiner direkten Kommunikationsverbindung zwischen dem Datensammler 3 und dem IT-System des Abrechnungsdienstleisters. Auch dieser Fall wird aber als weiterleiten der Daten bzw. Datentelegramme der Endgeräte 2 an die Zentrale 7 durch die Datensammler 3 verstanden, auch wenn die Daten in einer kommunikationstechnisch korrekt beschriebenen Weise nur in einem Cloud-Speicher abgelegt werden, auf den auch die Zentrale 7 zugreifen kann.

Es ist nun vorgesehen, dass ein Verbindungsaufbau mittels der Mobilfunk-Datenübertragung 9 von dem Datensammler 3 zu der Zentrale 7 über die beispielsweise durch das Mobilfunkmodem hergestellte Mobilfunk-Kommunikationsstrecke zu den vorgesehenen Zeitpunkten durch den Datensammler 3 geprüft wird. Dies kann beispielsweise anhand der Verbindungsqualität, der Dauer der Mobilfunk-Datenübertragung 9 und/oder der Anzahl der Verbindungsversuche für die Mobilfunk-Datenübertragung 9 über die Mobilfunk-Kommunikationsstrecke 8 erfolgen. Dabei entscheidet der Datensammler 3 eigenständig, ob die Mobilfunk-Datenübertragung 9 zustande gekommen ist oder nicht. Sofern die Mobilfunk-Datenübertragung 9 zustande gekommen ist, wird der Datensammler 3 als Datensammler mit Mobilfunk-Datenübertragung 9 angesehen, und die Daten der Endgeräte 2 sind oder werden, beispielsweise durch Weiterleiten der durch den Datensammler 3 empfangenen Datentelegramme der Endgeräte in unveränderter Form, an die Zentrale 7 weitergeleitet. Dies stellt den regulären Betrieb (Gateway-Modus) des Datensammlers 3 dar. Das Zustandekommen der Mobilfunk-Datenübertragung 9.1, 9.2 und 9.3 ist in Figur 1 schematisch durch die blitzförmigen Pfeile an den entsprechenden Mobilfunk-Kommunikationsstrecken 8 von den Datensammlern 3.1, 3.2, 3.3 dargestellt.

Sofern dagegen ein Datensammler 3.4 keine Mobilfunk-Datenübertragung 9.4 (dargestellt durch den durchgestrichen gezeichneten blitzförmigen Pfeil) aufbauen kann, eine Mobilfunk-Datenübertragung 9.4 also nicht zustande kommt, sendet der Datensammler als Datensammler 3.4 ohne Mobilfunk-Datenübertragung 9.4 von den Endgeräten 2 empfangene Datentelegramme über die Funkkommunikation 6 des lokalen Funknetzes 4 wieder aus. Dies ist in Figur 1 bei dem Datensammler 3.4 durch die sechs parallel angeordneten, gebogenen Striche dargestellt. Es wird darauf hingewiesen, dass es sich trotz der (zur Verdeutlichung) anderen Darstellung um technisch dieselbe Funkkommunikation 6 in demselben lokalen Funknetz 4 handelt wie bei der Übertragung der Datentelegramme von den Endgeräten 2 zu den Datensammlern 3.

Durch das Wiederaussenden der von Endgeräten 2 empfangenen Datentelegramme durch den Datensammler 3.4 ohne Mobilfunk-Datenübertragung 9.4 können benachbarte Datensammler 3, in dem gezeichneten Beispiel beispielsweise die Datensammler 3.2 und 3.3, diese Datentelegramme im "Endgerätefunk" empfangen und sie (als Datensammler 3.2, 3.3 mit Mobilfunk-Datenübertragung 9.2, 9.3 so in gleicher Weise über die Mobilfunk-Kommunikationsstrecke 8 an die Zentrale 7 übertragen, wie dies für unmittelbar von einem Endgerät 2 empfangene Datentelegramme vorgesehen ist.

Dabei ist es möglich, dass der Datensammler 3.4 ohne Mobilfunk-Datenübertragung 9.4 die wieder ausgesendeten Datentelegramme kennzeichnet, so dass der diese wiederausgesendeten Datentelegramme empfangende Datensammler 3.2 oder 3.3 als solche erkennt und bei der nächsten Mobilfunk-Datenübertragung 9.2 bzw. 9.3 auch dann an die Zentrale überträgt, wenn die Zentrale 7 diese Datentelegramme von dem Datensammler 3.2 oder 3.3 nicht anfordert. Dies stellt allerdings nur eine Möglichkeit zur Behandlung der wiederausgesendeten Datentelegramme durch den empfangenden Datensammler 3.2 oder 3.3 dar. Andere Alternativen hierzu wurden bereits ausführlich beschrieben, und können hier als alternative Möglichkeiten verwendet werden. So kommt beispielsweise auch eine Umorganisation der Datensammler 3.2 oder 3.3 durch die Zentrale 7 in Frage, indem die Zentrale 7 Speicherlisten oder Übertragungslisten für diese Datensammler 3.2 oder 3.3 überarbeitet, solange der Datensammler 3.4 keine Mobilfunk-Datenübertragung 9.4 zu der Zentrale 7 aufbauen kann. Die in diesem Zusammenhang bereits beschriebenen weiteren Lösungen werden hier nicht noch einmal wiederholt.

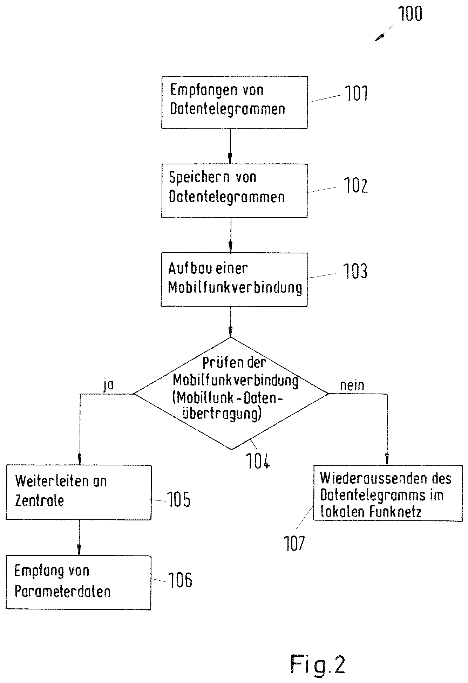

Mit Bezug auf Figur 2 wird nachfolgend eine Ausführungsform des erfindungsgemäßen Verfahrens 100 zum Übertragen von Daten aus dem lokalen Funknetz 4 zu der entfernten Zentrale 7 beschrieben, wobei sich die Beschreibung der Ausführungsform des Verfahrens 100 auf die Basisfunktionen beschränkt.

In einem bereits beschriebenen Asynchronempfang oder Synchronempfang mit ausgewählten Endgeräten 2 empfängt der Datensammler 3 Datentelegramme der Endgeräte 2 in einem ersten Verfahrensschritt 101.

Die empfangenen Datentelegramme speichert der Datensammler 3 in einem Datenspeicher des Datensammlers 3 ab, um diese Datentelegramme als Daten der Endgeräte 2 später über eine Mobilfunk-Kommunikationsstrecke 8 an die Zentrale 7 weiter zu übertragen. Hierbei können entweder alle empfangenen Datentelegramme gespeichert werden, oder es ist vorgesehen, nur die Datentelegramme von Endgeräten 2 zu speichern, die von dem Datensammler 3 (zumindest gegebenenfalls) an die Zentrale 7 übertragen werden sollen. Dies erfolgt in Verfahrensschritt 102. Die Organisation der Funkkommunikation in dem lokalen Funknetz 4, insbesondere die Frage, ob Datentelegramme bestimmter Endgeräte 2 in bestimmten Datensammlern 3 gespeichert werden sollen, kann durch die Zentrale 7 organisiert und den jeweiligen Datensammlern 3 beispielsweise durch Übertragung von Parameterdateien in der Mobilfunkkommunikation 9 mitgeteilt werden. Hierzu kann die Zentrale 7 Speicherlisten und/oder Übertragungslisten mit Gerätekennung von Endgeräten 2 für bestimmte Datensammler 3 erzeugen. Wenn in einem Datensammler 3 eine solche Speicherliste oder Übertragungsliste für Daten bzw. Datentelegramme eines Endgeräts 2 vorliegt, speichert der Datensammler 3 ein Datentelegramm ab, das er von einem in einer seiner Listen enthaltenen Endgeräte 2 empfängt.

Zu vorgegebenen Zeitpunkten, beispielsweise einmal pro Tag oder zu anderen durch den Fachmann frei auswählbaren oder durch den Datensammler 3 autark bestimmbaren Zeitpunkten (pseudostochastisch, zyklisch, ereignisgesteuert, usw.), baut der Datensammler 3 in Verfahrensschritt 103 eine Verbindung zu der Zentrale 7 über die Mobilfunk-Kommunikationsstrecke 8 auf.

Dieser Verbindungsaufbau wird durch den Datensammler 3 geprüft im Hinblick darauf, ob die Mobilfunk-Datenübertragung 9 zu der Zentrale 7 zustande gekommen ist oder nicht. Diese Prüfung kann autark durch den Datensammler 3 durchgeführt werden, d. h. aufgrund von durch den Datensammler 3 ermittelbaren Werten zu der Mobilfunkverbindung (bspw. die RSSI-Werte der Verbindung zur Mobilfunk-Basisstation) und Informationen zum Zustandekommen einer Mobilfunk-Datenübertragung 9, die eine Kommunikations-Verbindung zum Server 7 bzw. Cloud-Speicher einschließt. Möglichkeiten hierzu wurden bereits beschrieben und sollen an dieser Stelle nicht wiederholt werden. Das Ergebnis der Prüfung der Mobilfunk-Datenübertragung 9 in Verfahrensschritt 104 ist, dass entweder die Mobilfunk-Datenübertragung 9 zustande gekommen ist oder nicht zustande gekommen.

Im Falle einer zustande gekommenen Mobilfunk-Datenübertragung 9 kann davon ausgegangen werden, dass der Datensammler 3 über die Mobilfunk-Datenübertragung 9 tatsächlich in der Lage war, die zu übertragenden Daten über die Mobilfunk-Kommunikationsstrecke 8 an die Zentrale 7 weiterzuleiten, wie in Verfahrensschritt 105 dargestellt. Während die Mobilfunk-Datenübertragung 9 mit der Zentrale 7 besteht, kann auch die Zentrale 7 Parameterdaten, beispielsweise die zuvor erwähnte Übertragungsliste und/oder Speicherliste als Parameterdatei, an den Datensammler 3 übertragen. Dies ist in Figur 2 durch den Verfahrensschritt 106 dargestellt, wobei die Verfahrensschritte 105 und 106 auch in umgekehrter Reihenfolge oder vermischt durchgeführt werden können. Dies ist die Funktionsweise eines Datensammlers 3 mit Mobilfunk-Datenübertragung 9.

Sofern sich bei der Überprüfung der Mobilfunk-Datenübertragung 9 auf Zustandekommen in Verfahrensschritt 104 ergibt, dass keine Mobilfunk-Datenübertragung 9 mit der Zentrale 7 zustande gekommen ist, sendet der Datensammler 3 als Datensammler 3 ohne Mobilfunk-Datenübertragung 9 von Endgeräten 2 empfangene Datentelegramme über eine Kommunikation des lokalen Funknetzes 4 wieder aus, wie in Verfahrensschritte 107 dargestellt.

Diese wiederausgesendeten Datentelegramme eines Datensammlers 3 ohne Mobilfunk-Datenübertragung 9 wird, wie durch das vorgeschlagene Verfahren 100 bezweckt, durch einen benachbarten Datensammler 3 in einem Empfangszeitfenster bei der nächsten Durchführung des erfindungsgemäßen Verfahrens 100 in dem benachbarten Datensammler 3 (d.h. während dessen Verfahrensschritt 101) empfangen, so dass auch dieses Datentelegramm eines Endgerätes 2 nun von dem benachbarten Datensammler 3 an die Zentrale 7 weitergeleitet werden kann, sofern dieser benachbarte Datensammler die Mobilfunk-Datenübertragung 9 über die Verbindung zur Mobilfunk-Datenübertragung 8 zu der Zentrale 7 aufbauen kann.

In dem Verfahrensschritt 104 mit Prüfen der Mobilfunk-Datenübertragung 9 schaltet ein Datensammler 3 abhängig von dem Ergebnis der Überprüfung also in einen Modus Datensammler 3 mit Mobilfunk-Datenübertragung 9 (Gateway-Modus) oder einen Modus Datensammler 3 ohne Mobilfunk-Datenübertragung 9 (Repeater-Modus). Als Datensammler 3 ohne Mobilfunk-Datenübertragung 9 schaltet der Datensammler 3 in eine Repeater-Funktion, um von ihm empfangene Datentelegramme von Endgeräten 2 auch dann sicher an die Zentrale 7 weiterzuleiten, wenn der Datensammler 3 selbst keine Mobilfunk-Datenübertragung 9 zu der Zentrale 7 aufbauen kann.

Durch diese Repeater-Funktion der Datensammler 3 wird das AMR-System insgesamt sehr robust und kann ohne einen Serviceeinsatz vor Ort weiterbetrieben werden, auch wenn eine Mobilfunk-Datenübertragung 9 zwischen einem Datensammler 3 und der Zentrale 7 temporär oder dauerhaft nicht zustande kommt.

Es kann erfindungsgemäß vorgesehen sein, dass auch ein Datensammler 3 ohne Mobilfunk-Datenübertragung 9 bei dem nächsten Zeitpunkt, zu dem eine Mobilfunk-Datenübertragung 9 über die Mobilfunk-Kommunikationsstrecke 8 zu der Zentrale 7 aufgebaut werden soll, diesen Verbindungsaufbau wieder versucht. Sofern der Verbindungsaufbau dann gelingt, schaltet der Datensammler 3 zurück in den Modus "Datensammler 3 mit Mobilfunk-Datenübertragung", in dem der Datensammler 3 ordnungsgemäß funktioniert und die Daten der Endgeräte 2 als Datentelegramme eigenständig an die Zentrale 7.

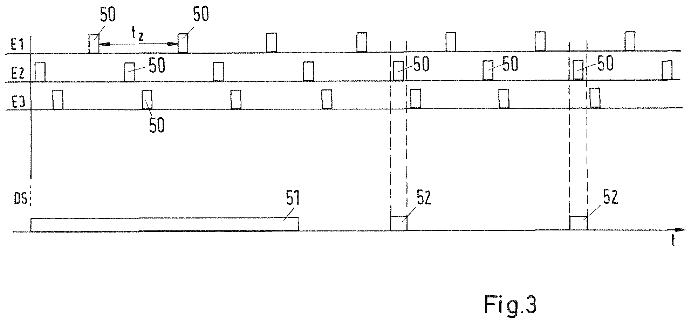

In Figur 3 ist anhand eines Übertragungszeitschemas, in dem Datentelegramme 50 von Endgeräten 2 (hier bezeichnet als Endgeräte E1, E2 und E3) zu bestimmten Zeitpunkten t ausgesendet werden und durch einen Datensammler 3 (hier bezeichnet als Datensammler DS) in verschiedenen Empfangszeitfenstern 51, 52 empfangen werden.

Die Endgeräte 2 senden aufeinanderfolgende Datentelegramme 50 in einer mittleren Zykluszeit tz aus. Die mittlere Zykluszeit tz beschreibt den zeitlichen Abstand zwischen zwei aufeinanderfolgenden Aussendungen eines Datentelegramms durch das Endgerät 3 und ist im Mittel vorzugsweise gleich. Zur Vermeidung systematischer Kollisionen zwischen Datentelegrammen 50 verschiedener Endgeräte E1, E2, E3 oder anderen sich zyklisch wiederholenden Aussendungen von Datentelegrammen in dem Gebäude 5 kann die Zykluszeit tz zufällig (stochastisch oder quasi-stochastisch) variieren, was jedoch in Figur 3 nicht dargestellt ist.

Der Datensammler 3 öffnet in einem ersten Turnus Asynchron-Empfangszeitfenster 51, in dem alle empfangbaren Datentelegramme 50 von Endgeräten 2 empfangen werden. Der Übersichtlichkeit halber sind nicht alle Datentelegramme 50 in Figur 3 mit einem Bezugszeichen "50" beschriftet.

Die Dauer des Asynchron-Empfangszeitfensters 51 ist derart bemessen, dass für einen definierten Sendezyklus mit der Zykluszeit tz zur Aussendung von Datentelegrammen 50 mehrere Datentelegramme 50 eines Endgeräts 2 in dem Asynchron-Empfangszeitfenster 51 empfangen werden können. In dem dargestellten Beispiel gemäß Figur 3 ist die Dauer des Asynchron-Empfangszeitfensters 51 gerade so lang, dass drei aufeinanderfolgend ausgesendete Datentelegramme 50 jedes der Endgeräte 2 (d. h. der als E1, E2 oder E3 bezeichneten Endgeräte 2) empfangen werden.

Allerdings benötigen die vergleichsweise langen Asynchron-Empfangszeitfenster 51 viel Energie, um einen Empfang über die vergleichsweise lange Dauer des Asynchron-Empfangszeitfensters 51 zu ermöglichen. Dies würde die Batterie der batteriebetriebenen Datensammler 3 belasten.

Daher finden die Asynchron-Empfangszeitfenster 51 in einem ersten Turnus statt und wiederholen sich nur in vergleichsweise großen Zeitabständen, beispielsweise zweimal im Monat. Die Zeitpunkte der in dem Asynchron-Empfangszeitfenster 51 empfangenen Datentelegramme 50 der verschiedenen Endgeräte 2 (im dargestellten Beispiel E1, E2, E3) können dazu verwendet werden, den Datensammler 3 auf diejenigen Endgeräte 2 zu synchronisieren, deren Datentelegramme (beispielsweise aufgrund einer Speicherliste oder Übertragungsliste) an die Zentrale 7 weitergeleitet werden sollen. Die Synchronisation auf bestimmte Endgeräte 2 ist möglich, weil die Endgeräte ihre Datentelegramme 50 in einem Sendezyklus mit einer vorgegebenen mittleren Zykluszeit tz aussenden, so dass die Sendezeitpunkte der Datentelegramme 50 für den Datensammler 3 vorhersagbar sind.

Daher ist es möglich, dass der Datensammler 3 wesentlich kürzere Synchron-Empfangszeitfenster 52 öffnet, wenn die Datentelegramme 50 des zu empfangenden Endgeräts 2 (im dargestellten Beispiel E2) zu empfangen sind. Dies erfolgt in einem zweiten Turnus für die Synchron-Empfangszeitfenster 52. Die Dauer der Synchron-Empfangszeitfenster 52 ist dabei so bemessen, dass die Datentelegramme 50 trotz ihrer zufälligen Schwankung um den mittleren Sendezeitpunkt zuverlässig empfangen werden.

Die Synchronisation des Datensammlers DS auf das Endgerät E2 ist in Figur 3 durch die gestrichelten Linien ausgehend von den Intervallgrenzen des Synchron-Empfangszeitfensters 52 angedeutet. Hierbei ist es so, dass auch im Falle einer Synchronisierung nicht jedes der ausgesendeten Datentelegramme 50 des synchronisierten Endgeräts 2 (hier E2) empfangen werden müssen. In dem dargestellten Beispiel wird nur jedes zweite Datentelegramm 50 des Endgeräteliste E2 empfangen, d. h. mit anderen Worten, dass der zweite Turnus der Synchron-Empfangszeitfenster 52 entsprechend eingestellt ist. Dies kann durch den Fachmann geeignet entsprechend den Anforderungen in dem konkreten Fall eingestellt werden.

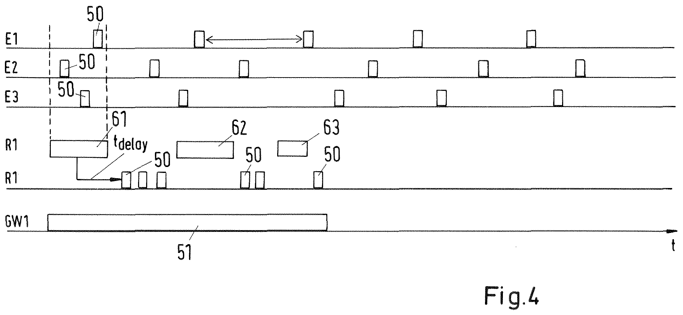

In Figur 4 ist anhand eines Übertragungszeitschemas gemäß einer weiteren Ausführungsform, in dem Datentelegramme 50 von Endgeräten 2 (hier bezeichnet als Endgeräte E1, E2 und E3) zu bestimmten Zeitpunkten t ausgesendet werden und durch einen Datensammler R1 ohne Mobilfunk-Datenübertragung 3 (hier bezeichnet als Repeater R1) in Empfangszeitfenstern 61, 62, 63 empfangen werden. Durch diesen Datensammler R1 ohne Mobilfunk-Datenübertragung werden die Datentelegramme 50 an einen Datensammler GW1 mit Mobilfunk-Datenübertragung (hier bezeichnet als Gateway GW1) weitergeleitet, der diese dann in einem entsprechenden Asynchron-Empfangszeitfenstern 51 empfangen kann.

Die von dem Datensammler ohne Mobilfunkverbindung R1 in Empfangszeitfenstern 61, 62, 63 empfangenen Endgeräte-Datentelegramme 50 werden im Datensammler R1 ohne Mobilfunkverbindung nur zwischengespeichert und sofort wieder ausgesendet. Das sofortige Aussenden erfolgt mit zufälligen oder pseudozufälligen Verzögerungen tdelay, die notwendig sind, um Kollisionen mit anderen Funktelegrammen zu vermeiden. Für das Aussenden muss der Empfang im Sendeempfänger des Datensammlers beendet werden. Nach dem Aussenden wird der Empfang unmittelbar wieder aufgenommen (neue Empfangszeitfenster 62 bzw. 63). Dies erfolgt solange, bis das Ende des konfigurierten Dauerempfangs (Dauerempfangsfensterbreite) erreicht ist (Ende des Empfangszeitfensters 63).

Die gestrichelte Linie zeigt schematisch die Übertragung der Endgeräte-Datentelegramme 50 von den Endgeräten E1, E2, E3

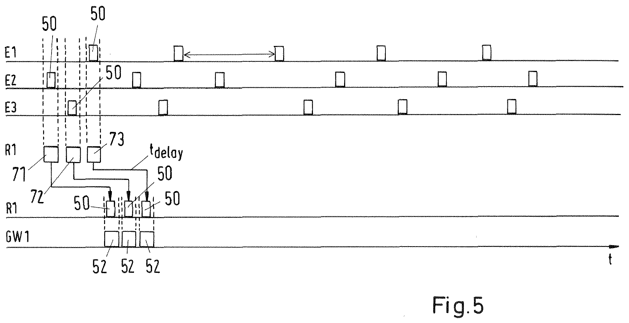

In Figur 5 ist ein Übertragungszeitschema gemäß einer weiteren Ausführungsform dargestellt, in dem Datentelegramme mit Synchronfunkinformationen 50 von Endgeräten 2 (hier bezeichnet als Endgeräte E1, E2 und E3) zu bestimmten Zeitpunkten t ausgesendet werden und durch einen Datensammler ohne Mobilfunk-Datenübertragung 3 (hier bezeichnet als Repeater R1) in prädizierten Empfangszeitfenstern 71, 72, 73 empfangen werden. Durch diesen Datensammler R1 ohne Mobilfunk-Datenübertragung (im Repeater-Modus) werden die Datentelegramme 50 an einen Datensammler GW1 mit Mobilfunk-Datenübertragung (hier bezeichnet als Gateway GW1) mit einer jeweils angepassten zeitlichen Verzögerung t_{delay} zu den Zeitpunkten weitergeleitet werden, zu dem der Datensammler mit Mobilfunkübertragung (GW1) seine Synchron-Empfangszeitfenster 52 geöffnet hat.

Die von dem Datensammler ohne Mobilfunkverbindung R1 im Empfangsfenster 61 empfangenen Endgeräte-Datentelegramme werden im Datensammler R1 ohne Mobilfunkverbindung nur zwischengespeichert und zu einem durch den Datensammler GW1 mit Mobilfunk-Datenübertragung prädizierbaren Zeitpunkt wieder ausgesendet, so dass diese in Synchron-Empfangszeitfenstern 52 empfangen werden.

Die gestrichelte Linie zeigt schematisch die Übertragung der Endgeräte-Datentelegramme 50 von den Endgeräten E1, E2, E3.

### Bezugszeichenliste:

- 1: Verbrauchserfassungssystem
- 2: Endgeräte
- 3: Datensammler
- 4: lokales Funknetz
- 5: Gebäude mit Gebäudeteilen 5.1 und 5.2
- 6: Funkkommunikation
- 7: Zentrale
- 8: Mobilfunk-Kommunikationsstrecke
- 9: Mobilfunk-Datenübertragung

- 50: Datentelegramm
- 51: Asynchron-Empfangszeitfenster
- 52: Synchron-Empfangszeitfenster
- 61, 62, 63: Asynchron-Empfangszeitfenster eines Datensammlers im Repeater-Modus
- 71, 72, 73: Synchron-Empfangszeitfenster eines Datensammlers im Repeater-Modus

- E1, E2, E3: Endgeräte
- DS: Datensammler
- R1: Datensammler im Repeater-Modus
- GW1: Datensammler im Gateway-Modus

- tz: Zykluszeit eines Sendezyklus für die Aussendung der Datentelegramme

- 100: im Datensammler implementiertes Verfahren zur Übertragung der Daten
- 101: Empfangen von Datentelegrammen
- 102: Speichern von Datentelegrammen
- 103: Aufbau einer Mobilfunkverbindung
- 104: Prüfen der Mobilfunk-Datenübertragung
- 105: Weiterleiten der Daten bzw. Datentelegramme an die Zentrale
- 106: Empfang von Parameterdateien
- 107: Wiederaussenden des Datentelegramms im lokalen Funknetz

## Patentansprüche

1. Verfahren zum Übertragen von Daten aus einem lokalen Funknetz (4) in einem Gebäude (5) zu einer entfernten Zentrale (7), bei dem die Daten von Endgeräten (2) an in dem Gebäude (5) installierte Datensammler (3) übertragen werden und von den Datensammlern (3) an die Zentrale (7) weiter übertragen werden, in der die Daten der Endgeräte (2) gespeichert werden, wobei
a) Datentelegramme (50) mit den Daten des Endgeräts (2), die durch ein Endgerät (2) in einer Funkkommunikation (6) des lokalen Funknetzes (4) unidirektional ausgesendet wurden, von einem in Funkreichweite des Endgeräts (2) installierten Datensammler (3) empfangen werden,
b) der Datensammler (3) die Daten über eine Mobilfunk-Kommunikationsstrecke (8) an die Zentrale (7) weiterleitet, sofern eine Mobilfunk-Datenübertragung (9) über die Mobilfunk-Kommunikationsstrecke (8) mit der Zentrale (7) zustande kommt,
wobei ein Verbindungsaufbau von dem Datensammler (3) zu der Zentrale (7) über die Mobilfunk-Kommunikationsstrecke (8) durch den Datensammler (3) geprüft wird, **dadurch gekennzeichnet, dass**
der Datensammler (3) batteriebetrieben wird,
dass die Endgeräte (2) aufeinanderfolgende Datentelegramme (50) in einem Sendezyklus mit einer mittleren Zykluszeit tz aussenden und der Empfang der Datentelegramme (50) von Endgeräten (2) durch den Datensammler (3) in einem kombinierten Asynchron- und Synchronempfang stattfindet,
- wobei der Datensammler (3) in einem ersten Turnus ein Asynchron-Empfangszeitfenster (51) öffnet, dessen Dauer zeitlich so bemessen ist, dass für den definierten Sendezyklus mehrere Datentelegramme (50) eines Endgerätes (2) empfangen werden können und in dem alle in dem Zeitraum des Asynchron-Empfangszeitfensters (51) in Funkreichweite ausgesendeten und empfangbaren Datentelegramme (50) empfangen werden, und
- wobei der Datensammler (3) in einem zweiten Turnus ein Synchron-Empfangszeitfenster (52) öffnet, in dem das Datentelegramm (50) eines ausgewählten Endgeräts (2) empfangen wird und dessen Dauer zeitlich so bemessen ist, dass das Datentelegramm (50) trotz zufälliger Schwankung der mittleren Zykluszeit tz empfangen werden kann,
dass der Datensammler (3) als ein Datensammler (3) ohne Mobilfunk-Datenübertragung (9) auf eine Repeaterfunktion umschaltet, sofern eine Mobilfunk-Datenübertragung (9) über die Mobilfunk-Kommunikationsstrecke (8) mit der Zentrale (7) nicht zustande kommt, und von Endgeräten (2) empfangene Datentelegramme (50) über die Funkkommunikation (6) des lokalen Funknetzes (4) unidirektional wieder aussendet, so dass die Datentelegramme (50) durch benachbarte Datensammler (3) in Funkreichweite des die Datentelegramme (50) wieder aussendenden Datensammlers (3) empfangen und an die Zentrale (7) weitergeleitet werden können,
und dass das Wiederaussenden von Datentelegrammen (50) mittels der Repeaterfunktion des Datensammlers (3) in dem Sendezyklus der Endgeräte (2) erfolgt.

2. Verfahren nach Anspruch 1, **dadurch gekennzeichnet, dass** der Datensammler (3) aufgrund der Verbindungsqualität der Mobilfunk-Kommunikationsstrecke (8), Dauer der Mobilfunk-Datenübertragung (9) und/oder Anzahl der Datenübertragungsversuche für die Mobilfunk-Datenübertragung (9) über die Mobilfunk-Kommunikationsstrecke (8) eigenständig entscheidet, ob von Endgeräten (2) empfange Datentelegramme (50) in einer Funkkommunikation (6) des lokalen Funknetzes (4) wieder ausgesendet werden.

3. Verfahren nach Anspruch 1 oder 2, **dadurch gekennzeichnet, dass** ein Datensammler (2) in einer Funkkommunikation (6) des lokalen Funknetzes (4) wieder ausgesendete Datentelegramme (50) als solche kennzeichnet.

4. Verfahren nach einem der vorhergehenden Ansprüche, **dadurch gekennzeichnet, dass** ein Datensammler (3) ohne Mobilfunk-Datenübertragung (9) alle empfangenen Datentelegramme (50) in der Funkkommunikation (6) des lokalen Funknetzes (4) wieder aussendet.

5. Verfahren nach einem der Ansprüche 1 bis 3, **dadurch gekennzeichnet, dass** ein Datensammler (3) ohne Mobilfunk-Datenübertragung (9) nur solche Datentelegramme (50) von Endgeräten (2) in der Funkkommunikation (6) des lokalen Funknetzes (4) wieder aussendet, die durch den Datensammler (3) verwaltet werden.

6. Verfahren nach einem der vorhergehenden Ansprüche, **dadurch gekennzeichnet, dass** Datensammler (3) ohne Mobilfunk-Datenübertragung (9) ein Status-Datentelegramm über die Funkkommunikation (6) des lokalen Funknetzes (4) aussenden mit der Information, dass keine Mobilfunk-Datenübertragung (9) zu der Zentrale (7) aufgebaut werden kann.

7. Verfahren nach einem der vorhergehenden Ansprüche, **dadurch gekennzeichnet, dass** Datensammler (3) mit Mobilfunk-Datenübertragung (9) ein Do-Not-Repeat-Datentelegramm aussenden, in dem mitgeteilt wird, dass der Datensammler (3) ein bestimmtes Endgerät (2) direkt empfangen kann und/oder dass Datentelegramme des bestimmten Endgeräts (2) von Datensammlern (3) ohne Mobilfunkempfang nicht weitergeleitet werden müssen.

8. Verfahren nach Anspruch 7, **dadurch gekennzeichnet, dass** mindestens einer der Datensammler (3) ohne Mobilfunk-Datenübertragung (9) Endgeräte aus empfangenen Do-Not-Repeat-Datentelegrammen in einer Do-Not-Repeat-Liste führt und von in der Do-Not-Repeat-Liste geführten Endgeräten (2) empfangene Datentelegramme (50) über die Funkkommunikation (6) des lokalen Funknetzes (4) nicht wieder aussendet.

9. Verfahren nach einem der vorhergehenden Ansprüche, **dadurch gekennzeichnet, dass** die während des Asynchron-Empfangszeitfensters (51) empfangenen Datentelegramme (50) zum Synchronisieren von Synchron-Empfangszeitfenstern (52) für den Empfang von Datentelegrammen (50) eines ausgewählten Endgeräts (2) im Synchronempfang verwendet werden.

10. Verfahren nach Anspruch 9, **dadurch gekennzeichnet, dass** aus den Zeitpunkten der während des Asynchron-Empfangszeitfensters (51) empfangenen Datentelegrammen (50) des ausgewählten Endgeräts (2) Synchronisationsinformationen abgeleitet und zum Synchronisieren mit diesem Endgerät (2) verwendet werden, wobei für den Empfang von Datentelegrammen (50) der synchronisierten Endgeräte (2) Synchron-Empfangszeitfenster (51) während der Aussendung der Datentelegramme geöffnet werden, deren Dauer derart bemessen ist, dass gerade das Datentelegramm (50) des synchronisierten Endgeräts (2) empfangbar ist.

11. Verfahren nach einem der Ansprüche 9 oder 10, **dadurch gekennzeichnet, dass** ein Datensammler (3) ohne Mobilfunk-Datenübertragung (9) ein Asynchron-Empfangszeitfenster (51) öffnet, um weiterhin an der Kommunikation in dem lokalen Funknetz (4) teilzunehmen und den Empfang von Endgeräte-Datentelegrammen zu synchronisieren, wobei der Datensammler (3) die Zeitpunkte für das Wiederaussenden der Datentelegramme (50) so wählt, dass diese nicht mit Datentelegrammen der Endgeräte (50) kollidieren, deren Sendezeitpunkte aus den während des Asynchron-Empfangszeitfensters (51) empfangenen Datentelegrammen (50) abgeleitet wurden.

12. Verfahren nach einem der vorhergehenden Ansprüche, **dadurch gekennzeichnet, dass** ein Datensammler (2) ohne Mobilfunk-Datenübertragung (9) in vorgegebenen Zeitabständen erneut eine Mobilfunk-Datenübertragung (9) zu der Zentrale (7) über die Mobilfunk-Kommunikationsstrecke (8) aufzubauen versucht.

13. Datensammler mit einem Sendeempfänger zum Empfangen und Senden von Datentelegrammen (50) in einem lokalen Funknetz (4) in einem Gebäude (5) und mit einem Mobilfunk-Modem zum Aufbau einer Mobilfunk-Datenübertragung (9) über eine Mobilfunk-Kommunikationsstrecke (8) zu einer entfernten Zentrale (7) sowie mit einer Recheneinheit, die zum Empfangen und Senden von Datentelegrammen (50) in dem lokalen Funknetz (4) über den Sendeempfänger und zum Aufbau der Mobilfunk-Datenübertragung (9) über das Mobilfunkmodem eingerichtet ist, **dadurch gekennzeichnet, dass** die Recheneinheit weiter dazu ausgebildet ist, die durch den Datensammler (3) ausgeführten Verfahrensschritte des Verfahrens nach einem der Ansprüche 1 bis 12 auszuführen.

## Claims

1. A method for transmitting data from a local radio network (4) in a building (5) to a remote center (7), in which the data are transmitted from terminals (2) to data collectors (3) installed in the building (5), and transmitted further from the data collectors (3) to the center (7), where the data of the terminals (2) are stored, wherein
a) data telegrams (50) with the data of the terminal (2), which were unidirectionally transmitted by a terminal (2) in a radio communication (6) of the local radio network (4), are received by a data collector (3) installed within the radio range of the terminal (2),
b) the data collector (3) relays the data to the center (7) via a mobile radio communication link (8), provided a mobile radio data transmission (9) with the center (7) comes about via the mobile radio communication link (8),
wherein a connection setup from the data collector (3) to the center (7) via the mobile radio communication link (8) is checked by the data collector (3), **characterized in that**
the data collector (3) is battery operated,
that the terminals (2) transmit sequential data telegrams (50) in a transmission cycle with an average cycle time t_{z}, and the data telegrams (50) of terminals (2) are received by the data collector (3) in a combined asynchronous and synchronous reception,
- wherein the data collector (3) opens an asynchronous reception time window (51) in a first regular cycle, the duration of which is timed in such a way that several data telegrams (50) of a terminal (2) can be received for the defined transmission cycle, and in which all data telegrams (50) transmitted and receivable within the radio range in the period of the asynchronous reception time window (51) are received, and
- wherein the data collector (3) opens a synchronous reception time window (52) in a second regular cycle, in which the data telegram (50) of a selected terminal (2) is received, and whose duration is timed in such a way that the data telegram (50) can be received despite a random fluctuation of the average cycle time t_{z},
that the data collector (3) as a data collector (3) without mobile radio data transmission (9) switches to a repeater function if a mobile radio data transmission (9) with the center (7) does not come about via the mobile radio communication link (8), and again unidirectionally transmits data telegrams (50) received by terminals (2) via radio communication (6) of the local radio network (4), so that the data telegrams (50) can be received by adjacent data collectors (3) within the radio range of the data collector (3) that is again transmitting the data telegrams (50), and relayed to the center (7),
and that data telegrams (50) are again transmitted via the repeater function of the data collector (3) in the transmission cycle of the terminals (2).

2. The method according to claim 1, **characterized in that** the data collector (3), based upon the connection quality of the mobile radio communication link (8), duration of the mobile radio data transmission (9) and/or number of data transmission attempts for the mobile radio data transmission (9) via the mobile radio communication link (8), independently decides whether data telegrams (50) received by terminals (2) are again transmitted in a radio communication (6) of the local radio network (4).

3. The method according to claim 1 or 2, **characterized in that** data telegrams (50) again transmitted in a radio communication (6) of the local radio network (4) are designated as such by a data collector (2).

4. The method according to one of the preceding claims, **characterized in that** a data collector (3) without mobile radio data transmission (9) again transmits all received data telegrams (50) in the radio communication (6) of the local radio network (4).

5. The method according to one of claims 1 to 3, **characterized in that** a data collector (3) without mobile radio data transmission (9) again transmits only those data telegrams (50) of terminals (2) in the radio communication (6) of the local radio network (4) that are managed by the data collector (3).

6. The method according to one of the preceding claims, **characterized in that** data collectors (3) without mobile radio data transmission (9) transmit a status data telegram via the radio communication (6) of the local radio network (4) with the information that no mobile radio data transmission (9) to the center (7) can be established.

7. The method according to one of the preceding claims, **characterized in that** data collectors (3) with mobile radio data transmission (9) transmit a do-no-repeat data telegram, which states that the data collector (3) can directly receive a specific terminal (2) and/or that data telegrams of the specific terminal (2) do not have to be relayed by data collectors (3) without mobile radio reception.

8. The method according to claim 7, **characterized in that** at least one of the data collectors (3) without mobile radio data transmission (9) records do-not-repeat data telegrams received by terminals in a do-not-repeat list, and does not again transmit data telegrams (50) received by terminals (2) recorded in the do-not-repeat list via the radio communication (6) of the local radio network (4).

9. The method according to one of the preceding claims, **characterized in that** the data telegrams (50) received during the asynchronous reception time window (51) are used for synchronizing synchronous reception time windows (52) for receiving data telegrams (50) of a selected terminal (2) in synchronous reception.

10. The method according to claim 9, **characterized in that** synchronization information is derived from the times of the data telegrams (50) of the selected terminal (2) received during the asynchronous reception time window (51), and used for synchronization with this terminal (2), wherein, for receiving data telegrams (50) of the synchronized terminals (2), synchronous reception time windows (51) are opened while transmitting the data telegrams, the duration of which is measured in such a way that precisely the data telegram (50) of the synchronized terminal (2) is receivable.

11. The method according to one of claims 9 or 10, **characterized in that** a data collector (3) without mobile radio data transmission (9) opens an asynchronous reception time window (51), so as to continue participating in communication in the local radio network (4), and synchronize the reception of terminal data telegrams, wherein the data collector (3) selects the times for again transmitting the data telegrams (50) in such a way that the latter do not collide with data telegrams of the terminals (50) whose transmission times were derived from the data telegrams (50) received during the asynchronous reception time window (51).

12. The method according to one of the preceding claims, **characterized in that** a data collector (2) without mobile radio data transmission (9) attempts to again establish a mobile radio data transmission (9) to the center (7) via the mobile radio communication link (8) in prescribed time intervals.

13. A data collector with a transceiver for receiving and transmitting data telegrams (50) in a local radio network (4) in a building (5) and with a mobile radio modem for establishing a mobile radio data transmission (9) via a mobile radio communication link (8) to a remote center (7), as well as with a computing unit set up to receive and transmit data telegrams (50) in the local radio network (4) via the transceiver, and to establish the mobile radio data transmission (9) via the mobile radio modem, **characterized in that** the computing unit is further designed to perform the procedural steps of the method according to one of claims 1 to 12 performed by the data collector (3).

## Revendications

1. Procédé de transfert de données dans un réseau radio local (4) dans un bâtiment (5) vers un central éloigné (7), pour lequel les données de terminaux (2) sont transférées aux collecteurs de données (3) installés dans le bâtiment (5) et sont en plus transférées par les collecteurs de données (3) au central (7), dans lequel les données des terminaux (2) sont mémorisées, sachant que
a) les télégrammes de données (50) avec les données du terminal (2), qui ont été émis de façon unidirectionnelle par un terminal (2) dans une communication radio (6) du réseau radio local (4), sont reçus par un collecteur de données (3) installé à portée radio du terminal (2),
b) le collecteur de données (3) transmet les données au central (7) sur une distance de communication en téléphonie mobile (8) dans la mesure où un transfert de données en téléphonie mobile (9) a lieu avec le central (7) sur la distance de communication en téléphonie mobile (8),
sachant qu'un établissement de liaison du collecteur de données (3) au central (7) est contrôlé sur la distance de communication en téléphonie mobile (8) par le collecteur de données (3), **caractérisé en ce que**
le collecteur de données (3) est exploité sur batterie,
**en ce que** les terminaux (2) émettent des télégrammes de données successifs (50) dans un cycle d'émission avec une durée de cycle t_{z} moyenne et la réception des télégrammes de données (50) des terminaux (2) a lieu par le collecteur de données (3) dans une réception asynchrone et synchrone combinée,
- sachant que le collecteur de données (3) ouvre dans une première rotation une fenêtre de temps de réception asynchrone (51), dont la durée est mesuré dans le temps de telle manière que pour le cycle d'émission défini, plusieurs télégrammes de données (50) d'un terminal (2) peuvent être reçus et dans lequel sont reçus tous les télégrammes de données (50) émis et recevables dans la portée radio dans la période de temps de la fenêtre de temps de réception asynchrone (51), et
- sachant que le collecteur de données (3) ouvre dans une deuxième rotation, une fenêtre de temps de réception synchrone (52), dans laquelle le télégramme de données (50) d'un terminal sélectionné (2) est reçu et dont la durée est mesurée dans le temps de telle manière que le télégramme de données (50) peut être reçu malgré une variation accidentelle de la durée de cycle moyenne t_{z},
**en ce que** le collecteur de données (3) passe en tant que collecteur de données (3) sans transfert de données en téléphonie mobile (9) dans un fonctionnement de répéteur dans la mesure où un transfert de données en téléphonie mobile (9) n'a pas lieu sur la distance de communication en téléphonie mobile (8) avec le central (7) et émet à nouveau de façon unidirectionnelle les télégrammes de données (50) reçus des terminaux (2) par le biais de la communication radio (6) du réseau radio local (4) de telle manière que les télégrammes de données (50) peuvent être reçus par les collecteurs de données voisins (3) à portée radio du collecteur de données (3) émettant à nouveau les télégrammes de données (50) et peuvent être transmis au central (7),
et **en ce que** la réémission des télégrammes de données (50) a lieu au moyen du fonctionnement de répéteur du collecteur de données (3) dans le cycle d'émission des terminaux (2).

2. Procédé selon la revendication 1, **caractérisé en ce que** le collecteur de données (3) en raison de la qualité de liaison de la distance de communication en téléphonie mobile (8), décide de façon autonome la durée du transfert de données en téléphonie mobile (9) et/ou le nombre des essais de transfert de données pour le transfert de données en téléphonie mobile (9) sur la distance de communication en téléphonie mobile (8), si les télégrammes de données (50) reçus par les terminaux (2) sont à nouveau émis dans une communication radio (6) du réseau radio local (4).

3. Procédé selon la revendication 1 ou 2, **caractérisé en ce qu**'un collecteur de données (2) dans une communication radio (6) du réseau radio local (4) caractérise comme tels les télégrammes de données à nouveau envoyés (50).

4. Procédé selon l'une quelconque des revendications précédentes, **caractérisé en ce qu**'un collecteur de données (3) émet à nouveau sans transfert de données en téléphonie mobile (9) tous les télégrammes de données reçus (50) dans la communication radio (6) du réseau radio local (4).

5. Procédé selon l'une quelconque des revendications 1 à 3, **caractérisé en ce qu**'un collecteur de données (3) n'émet à nouveau sans transfert de données en téléphonie mobile (9) que des télégrammes de données (50) des terminaux (2) dans la communication radio (6) du réseau radio local (4), qui sont administrés par le collecteur de données (3).

6. Procédé selon l'une quelconque des revendications précédentes, **caractérisé en ce que** des collecteurs de données (3) émettent sans transfert de données en téléphonie mobile (9) un télégramme de données d'état par le biais de la communication radio (6) du réseau radio local (4) avec l'information qu'aucun transfert de données en téléphonie mobile (9) au central (7) ne peut être établi.

7. Procédé selon l'une quelconque des revendications précédentes, **caractérisé en ce que** des collecteurs de données (3) avec transfert de données en téléphonie mobile (9) émettent un télégramme de données « Ne-pas-répéter » dans lequel il est communiqué que le collecteur de données (3) peut recevoir directement un terminal déterminé (2) et/ou **en ce que** des télégrammes de données du terminal déterminé (2) ne doivent pas être transmis par les collecteurs de données (3) sans réception en téléphonie mobile.

8. Procédé selon la revendication 7, **caractérisé en ce qu**'au moins un des collecteurs de données (3) gère sans transfert de données en téléphonie mobile (9) des terminaux à partir des télégrammes de données « Ne-pas-répéter » reçus dans une liste « Ne-pas- répéter » et n'émet pas à nouveau les télégrammes de données (50) reçus des terminaux (2) gérés dans la liste « Ne-pas-répéter » par le biais de la communication radio (6) du réseau radio local (4).

9. Procédé selon l'une quelconque des revendications précédentes, **caractérisé en ce que** les télégrammes de données (50) reçus pendant la fenêtre de temps de réception asynchrone (51) pour la synchronisation des fenêtres de temps de réception synchrones (52) sont utilisés pour la réception des télégrammes de données (50) d'un terminal sélectionné (2) dans la réception synchrone.

10. Procédé selon la revendication 9, **caractérisé en ce qu**'à partir des moments des télégrammes de données (50) reçus pendant la fenêtre de temps de réception asynchrone (51) du terminal sélectionné (2), des informations de synchronisation sont dérivées et sont utilisées pour la synchronisation avec ce terminal (2), sachant que pour la réception des télégrammes de données (50) des terminaux synchronisés (2) des fenêtres de temps de réception synchrones (51) sont ouvertes pendant l'émission des télégrammes de données, dont la durée est mesurée de telle manière que le télégramme de données (50) du terminal synchronisé (2) peut être précisément reçu.

11. Procédé selon l'une quelconque des revendications 9 ou 10, **caractérisé en ce qu**'un collecteur de données (3) ouvre sans transfert de données en téléphonie mobile (9) une fenêtre de temps de réception asynchrone (51) pour participer en outre à la communication dans le réseau radio local (4) et synchroniser la réception des télégrammes de données de terminaux, sachant que le collecteur de données (3) sélectionne les moments pour la réémission des télégrammes de données (50) de telle manière que ceux-ci ne coïncident pas avec les télégrammes de données des terminaux dont les moments d'émission ont été dérivés des télégrammes de données (50) reçus pendant la fenêtre de temps de réception asynchrone (51).

12. Procédé selon l'une quelconque des revendications précédentes, **caractérisée en ce qu'un** collecteur de données (2) essaie sans transfert de données en téléphonie mobile (9) à des intervalles de temps prédéfinis d'établir à nouveau un transfert de données en téléphonie mobile (9) vers le central (7) sur la distance de communication en téléphonie mobile (8).

13. Collecteur de données avec un émetteur-récepteur destiné à la réception et à l'émission de télégrammes de données (50) dans un réseau radio local (4) dans un bâtiment (5) et avec un modem de téléphonie mobile pour l'établissement d'un transfert de données en téléphonie mobile (9) sur une distance de communication en téléphonie mobile (8) vers un central éloigné (7) ainsi qu'avec une unité de calcul, qui est agencée pour la réception et l'émission de télégrammes de données (50) dans le réseau radio mobile (4) par l'émetteur-récepteur et pour l'établissement du transfert de données en téléphonie mobile (9) par le biais du modem de téléphonie mobile **caractérisé en ce que** l'unité de calcul est en plus constituée pour exécuter les étapes de procédé effectuées par le collecteur de données (3) du procédé selon l'une quelconque des revendications 1 à 12.
